(19) Europäisches Patentamt European Patent Office Office européen des brevets

(11) **EP 3 305 056 B1**

(12) **EUROPÄISCHE PATENTSCHRIFT**

(45) Veröffentlichungstag und Bekanntmachung des Hinweises auf die Patenterteilung:
**03.04.2019 Patentblatt 2019/14**

(51) Int Cl.:
***A01C 17/00*** *(2006.01)*    ***A01B 79/00*** *(2006.01)*

(21) Anmeldenummer: **17001586.1**

(22) Anmeldetag: **25.09.2017**

(54) **VERFAHREN ZUM GLEICHMÄSSIGEN VERTEILEN VON STREUGUT AN LAGEN MIT VERSCHIEDENER BODENNEIGUNG MITTELS EINES SCHEIBENSTREUERS UND HIERFÜR GEEIGNETER SCHEIBENSTREUER**

METHOD FOR THE EVEN DISTRIBUTION OF MATERIAL ON SLOPED LOCATIONS BY MEANS OF A DISC SPREADER AND DISC SPREADER SUITABLE THEREFOR

PROCEDE DE DISTRIBUTION UNIFORME D'UN MATERIAU SUR DES ZONES EN PENTE AU MOYEN D'UN DISPERSEUR A DISQUE ET D'UN DISPERSEUR DE DISQUE ADAPTE A CELUI-CI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.10.2016 DE 102016011828**

(43) Veröffentlichungstag der Anmeldung:
**11.04.2018 Patentblatt 2018/15**

(73) Patentinhaber:
- **RAUCH Landmaschinenfabrik GmbH**
  **76547 Sinzheim (DE)**
- **Institut National de Recherche en Sciences et Technologies pour l'Environnement et l'Agriculture**
  **(IRSTEA)**
  **92160 Antony (FR)**

(72) Erfinder:
- **Rauch, Norbert**
  **76547 Sinzheim (DE)**
- **Stöcklin, Volker**
  **77975 Ringsheim (DE)**
- **Thullner, Christian**
  **76547 Sinzheim (DE)**
- **Piron, Emmanuel**
  **03300 Creuzier le Vieux (FR)**
- **Miclet, Denis**
  **03150 Varennes-sur-Allier (FR)**
- **Abbou-Ou-Cherif, El mehdi**
  **03150 Varennes-sur Allier (FR)**

(74) Vertreter: **Lichti - Patentanwälte Partnerschaft mbB**
**Postfach 41 07 60**
**76207 Karlsruhe (DE)**

(56) Entgegenhaltungen:
**EP-A1- 1 068 784    FR-A1- 2 882 496**

**Beschreibung**

Die Erfindung betrifft ein Verfahren zum gleichmäßigen Verteilen von Streugut an Lagen mit verschiedener Bodenneigung mittels eines Scheibenstreuers, welcher wenigstens eine Verteilerscheibe und wenigstens ein der Verteilerscheibe zugeordnetes Dosierorgan umfasst, wobei

- bei der Fahrt an oder nahe einer Krümmung des Bodens oder bei der Überfahrt einer Krümmung des Bodens, welche eine Scheitellinie mit einer senkrecht zur Fahrtrichtung des Scheibenstreuers angeordneten Erstreckungsrichtungskomponente aufweist, die Verteilerscheibe um eine im Wesentlichen senkrecht zur Fahrtrichtung angeordnete Schwenkachse geneigt wird; und/oder
- bei der Fahrt an oder nahe einer Krümmung des Bodens oder bei der Überfahrt einer Krümmung des Bodens, welche eine Scheitellinie mit einer parallel zur Fahrtrichtung des Scheibenstreuers angeordneten Erstreckungsrichtungskomponente aufweist, die Verteilerscheibe um eine im Wesentlichen parallel zur Fahrtrichtung angeordnete Schwenkachse geneigt wird.

Die Erfindung bezieht sich ferner auf einen zur Durchführung eines solchen Verfahrens geeigneten Scheibenstreuer mit wenigstens einer Verteilerscheibe, wenigstens einem der Verteilerscheibe zugeordneten Dosierorgan sowie wenigstens einer, der Verteilerscheibe zugeordneten Neigungsverstelleinrichtung.

Derartige Scheibenstreuer finden insbesondere in Form von Zweischeiben-Düngerstreuern in der Landwirtschaft zur Verteilung von Streugut, wie mineralischem und organischem Dünger und dergleichen, aber auch in Form von Winterdienststreumaschinen zur Verteilung von Streusalz und/oder Splitt verbreiteten Einsatz. Ihre Vorteile liegen dabei vornehmlich in ihrer einfachen Bedienbarkeit und hohen Leistungsfähigkeit bei verhältnismäßig geringen Investitionskosten. Insbesondere im Falle von landwirtschaftlichen Scheibenstreuern haben sich vornehmlich Zweischeiben-Düngerstreuer etabliert, welche mit einem Paar von Verteilerscheiben mit diesen zugeordneten Dosierorganen ausgestattet sind.

Um für die gewünschte Verteilung des Streugutes auf dem Boden zu sorgen, lassen sich bei gattungsgemäßen Scheibenstreuern einerseits die Dosierung des Massenstromes an Streugut auf die einem jeweiligen Dosierorgan zugeordnete Verteilerscheibe, andererseits die Verteilung des Streugutes durch die Verteilerscheibe(n) einstellen bzw. regeln. Für letzteres ist es üblich, Einstellmittel zum Einstellen des Scheibenstreuers auf verschiedene Arbeitsbreiten, Streugüter und/oder Verteilarten vorzusehen. Die Dosierorgane umfassen üblicherweise einen aktuatorisch betätigten Dosierschieber, welcher mit einer Dosieröffnung zusammenwirkt, können selbstverständlich aber auch andersartig aufgebaut sein, wie beispielsweise in Form von Zellenrädern und dergleichen.

Eine gleichmäßige Verteilung des Streugutes auf dem Boden, wie sie zur Vermeidung von lokalen Über- bzw. Unterdünungen grundsätzlich angestrebt wird, ist mittels Ein- oder insbesondere Zweischeibenstreuern in der Ebene problemlos möglich, wobei auf dem zu bestreuenden Feld in der Regel mehrere, üblicherweise etwa parallele Fahrgassen angelegt sind, welche der Scheibenstreuer im Fahrgassenbetrieb nacheinander durchführt, um eine definierte Überlappung der nebeneinander abgelegten Streufächer zu erzielen. Grundlage ist die etwa halbkreis- bzw. hörnchenförmige Streugutablage, bei welcher die Menge an Verteilgut innerhalb des Halbkreises bzw. Hörnchens von der Mitte zu den Randzonen abnimmt. Beim Anschlussfahren in der benachbarten Fahrgasse erfolgt eine entsprechend von innen nach außen abnehmende Streugutablage, so dass sich diese in der Überlappungszone zu einer weitestgehend gleichmäßigen Streugutverteilung ergänzen.

Als demgegenüber problematischer erweist sich die Gewährleistung einer gleichmäßigen Streugutverteilung auf Hanglagen, wobei das Problem vornehmlich darin besteht, dass bei einer Fahrt eines Zweischeibenstreuers am geneigten Hang der Dünger aufgrund der Schwerkraft nicht, wie es beim Streuen in der Ebene der Fall ist, an der gleichen Stelle auf die Verteilerscheibe trifft, d.h. sein Aufgabepunkt auf die Verteilerscheiben wird in Abhängigkeit der Hangneigung verlagert. Der hieraus resultierende Streufehler ist umso größer, je größer die Fallhöhe des Düngers zwischen dem Dosierorgan und der Scheibenfläche und je größer die Neigungslage des Scheibenstreuers ist. Um dem zu begegnen, beschreibt die EP 2 415 338 B1 ein Verfahren zur gleichmäßigen Verteilung von Streugut an Hanglagen mittels eines Zweischeibenstreuers mit gesteuerten Einrichtungen zur Veränderung des Aufgabepunktes des Streugutes auf die umlaufenden Verteilerscheiben, wobei einerseits gegenüber der düngersorten- und arbeitsbreitenabhängigen Einstellung des Aufgabepunktes beim Streuen in der Ebene bei der Hangaufwärts- und bei der Hangabwärtsfahrt die Aufgabepunkte der rechten und linken Verteilerscheibe gleichsinnig verlagert werden und andererseits bei der Fahrt entlang des Hangs, also bei der Querhangfahrt, die Aufgabepunkte der rechten und linken Verteilerscheibe gegensinnig verlagert werden. Auf diese Weise ergibt sich eine wirksame Kompensation des infolge der Hangneigung ansonsten verursachten Streufehlers.

Bislang in der Praxis noch gar nicht problematisiert worden ist indes eine Situation, in welcher sich ein Scheibenstreuer an Lagen mit verschiedenen Bodenneigungen bewegt und dabei folglich an oder nahen konvexen und/oder konkaven Krümmungen des Bodens fährt bzw. diese überfährt. In diesem Zusammenhang wurde festgestellt, dass sich hierbei nicht unerhebliche Streufehler ergeben können, welche vornehmlich in lokalen Unter- bzw. Überdüngen bestehen. Fährt beispielsweise der Scheibenstreuer über eine konkave Krümmung des Bodens hinweg, deren Scheitellinie sich vornehmlich senkrecht zur Fahrtrichtung erstreckt, so ergibt sich - in Fahrtrichtung entlang der jeweiligen Fahrgasse betrachtet - zunächst ein Bereich der Unterdüngung, weil sich der auf dem Boden abgelegte Streufächer infolge veränderter Neigung des Scheibenstreuers vorübergehend mit gegenüber der Fahrgeschwindigkeit höherer Geschwindigkeit nach vorne bewegt, während der Scheibenstreuer die konkave Krümmung überfährt, wonach sich ein Bereich der Überdüngung ergibt, weil sich der auf dem Boden abgelegte Streufächer nach dem Überfahren der konkaven Krümmung vorübergehend mit gegenüber der Fahrtgeschwindigkeit geringerer Geschwindigkeit nach vorne bewegt. Fährt der Scheibenstreuer hingegen beispielsweise über eine konvexe Krümmung des Bodens hinweg, deren Scheitellinie sich vornehmlich senkrecht zur Fahrtrichtung erstreckt, so ergibt sich - in Fahrtrichtung entlang der jeweiligen Fahrgasse betrachtet - in umgekehrter Weise zunächst ein Bereich der Überdüngung, weil sich der auf dem Boden abgelegte Streufächer infolge veränderter Neigung des Scheibenstreuers vorübergehend mit gegenüber der Fahrgeschwindigkeit geringerer Geschwindigkeit nach vorne bewegt, während der Scheibenstreuer die konvexe Krümmung überfährt, wonach sich ein Bereich der Unterdüngung ergibt, weil sich der auf dem Boden abgelegte Streufächer nach dem Überfahren der konvexen Krümmung vorübergehend mit gegenüber der Fahrtgeschwindigkeit höherer Geschwindigkeit nach vorne bewegt.

Die Lage solcher Bereiche der Über- bzw. Unterdüngung in Bezug auf die Scheitellinie der - konkaven oder konvexen - Krümmung des Bodens hängt zudem davon ab, ob der Scheibenstreuer die Krümmung des Bodens "von unten nach oben", d.h. z.B. von einem Bereich geringerer Neigung oder von einem im Wesentlichen ebenen Bereich in einen demgegenüber steileren Bereich hangaufwärts (Überfahrt einer konkaven Bodenkrümmung hangaufwärts) bzw. von einem Bereich höherer Neigung in einen demgegenüber flacheren Bereich oder in einen im Wesentlichen ebenen Bereich hangaufwärts (Überfahrt einer konvexen Bodenkrümmung hangaufwärts), oder "von oben nach unten", d.h. z. B. von einem Bereich höherer Neigung in einen demgegenüber flacheren Bereich oder in einen im Wesentlichen ebenen Bereich hangabwärts (Überfahrt einer konkaven Bodenkrümmung hangabwärts) bzw. von einem Bereich geringerer Neigung oder einem im Wesentlichen ebenen Bereich in einen demgegenüber steileren Bereich hangabwärts (Überfahrt einer konvexen Bodenkrümmung hangabwärts), durchfährt.

Darüber hinaus können sich Streufehler ergeben, wenn der Scheibenstreuer an oder nahe einer Bodenkrümmung - sei sie konvex oder sei sie konkav - etwa parallel zu dieser Bodenkrümmung fährt, da auf der der Krümmung zugewandten Seite das Streugut entweder gegen den ansteigenden oder abfallenden Hang abgeschleudert wird, wodurch sowohl die Arbeits- bzw. Streubreite als auch die Querverteilung des Streugutes verändert wird, so dass sich wiederum Bereiche einer Über- und einer Unterdüngung ergeben, welche in diesem Fall im Wesentlichen parallel zur Fahrtrichtung des Scheibenstreuers nebeneinander angeordnet sind. So ergibt sich beispielsweise im Falle einer konkaven Bodenkrümmung, an welcher der Scheibenstreuer etwa parallel entlangfährt (auf einer Seite wird das Streugut z.B. hangaufwärts gegen den ansteigenden Hang abgeworfen) ein sich etwa parallel zur Fahrtrichtung erstreckender Bereich der Unterdüngung und mit seitlichem Abstand von demselben auf der dem Scheibenstreuer abgewandten Seite ein sich gleichfalls etwa parallel zur Fahrtrichtung erstreckender Bereich der Überdüngung. Im umgekehrten Fall einer konvexen Bodenkrümmung, an welcher der Scheibenstreuer etwa parallel entlangfährt (auf einer Seite wird das Streugut z.B. hangabwärts über den abfallenden Hang abgeworfen), ergibt sich ein sich etwa parallel zur Fahrtrichtung erstreckender Bereich der Überdüngung und mit seitlichem Abstand von demselben auf der dem Scheibenstreuer abgewandten Seite ein sich gleichfalls etwa parallel zur Fahrtrichtung erstreckender Bereich der Unterdüngung.

Die EP 1 068 784 A1 beschreibt einen Scheibenstreuer mit einem Vorratsbehälter, einem Dosierorgan sowie einer oder zwei Verteilerscheibe(n), welcher mit einer Verstelleinrichtung ausgestattet ist, die zum Halten des gesamten Scheibenstreuers oder auch nur des Dosierorgans, insbesondere gemeinsam mit der Verteilerscheibe, in einer konstanten Relativposition in Bezug auf den Boden ausgebildet ist, sofern der Boden Neigungen aufweist. Die Verstelleinrichtung kann mit entsprechenden Neigungs- oder Abstandssensoren ausgestattet sein oder mit einer auf einem Computer hinterlegten elektronischen Feldkarte in Verbindung stehen und ferner ein Positionserfassungssystem, wie beispielsweise GPS, umfassen.

Der Erfindung liegt daher die Aufgabe zugrunde, ein Verfahren zum gleichmäßigen Verteilen von Streugut an Lagen mit verschiedener Bodenneigung mittels eines Scheibenstreuers sowie einen Scheibenstreuer der eingangs genannten Art auf möglichst einfache und kostengünstige Weise dahingehend weiterzubilden, um Streufehler, insbesondere in Form von lokalen Unter- und Überdüngungen, wie sie bei der Fahrt des Scheibenstreuers an oder nahe Krümmungen des Bodens einschließlich der Überfahrt über solche Krümmungen des Bodens mit unterschiedlicher Bodenneigung gegenwärtig verursacht werden, zumindest weitgehend zu vermeiden.

In verfahrenstechnischer Hinsicht wird diese Aufgabe erfindungsgemäß bei einem Verfahren der eingangs genannten Art dadurch gelöst, dass

-  bei der Fahrt an oder nahe einer Krümmung des Bodens oder bei der Überfahrt einer Krümmung des Bodens, welche eine vornehmlich senkrecht zur Fahrtrichtung des Scheibenstreuers angeordnete Scheitellinie aufweist, die Verteilerscheibe um einen Winkel um die im Wesentlichen senkrecht zur Fahrtrichtung angeordnete Schwenkachse geneigt wird, welcher kleiner dem Krümmungswinkel der überfahrenen Krümmung des Bodens beträgt; und/oder

- bei der Fahrt an oder nahe einer Krümmung des Bodens oder bei der Überfahrt einer Krümmung des Bodens, welche eine vornehmlich parallel zur Fahrtrichtung angeordnete Scheitellinie aufweist, die Verteilerscheibe um einen Winkel um die im Wesentlichen parallel zur Fahrtrichtung angeordnete Schwenkachse geneigt wird, welcher kleiner dem Krümmungswinkel der Krümmung des Bodens beträgt.

Zur Lösung dieser Aufgabe sieht die Erfindung bei einem Scheibenstreuer der eingangs genannten Art ferner vor, dass die Neigungsverstelleinrichtung mittels einer Steuer- und/oder Regeleinrichtung betätigbar ist, welche zur Durchführung eines derartigen Verfahrens ausgebildet ist.

Die erfindungsgemäße Ausgestaltung sorgt für eine wirksame Kompensation der bei der Fahrt an oder nahe Krümmungen des Bodens bzw. während des Überfahrens von Krümmungen des Bodens entstehenden Streufehlern, indem die in Fahrtrichtung im Wesentlichen hintereinander angeordneten Bereiche einer Über- und einer Unterdüngung (im Falle der Überfahrt einer Bodenkrümmung mit senkrecht zur Fahrtrichtung angeordneter Erstreckungsrichtungskomponente) und/oder die in Fahrtrichtung im Wesentlichen parallel angeordneten Bereiche einer Über- und einer Unterdüngung (im Falle der Fahrt an oder nahe einer Bodenkrümmung mit parallel zur Fahrtrichtung angeordneter Erstreckungsrichtungskomponente) dadurch vermieden werden, dass die Verteilerscheibe in Richtung derjenigen Bodenkrümmung, in deren Richtung sie die Streugutpartikel abwirft, geneigt wird, wobei diese Neigungsverstellung selbstverständlich mehr oder minder kontinuierlich entsprechend der aktuellen Position des Scheibenstreuers in Bezug auf die jeweilige Bodenkrümmung und unter Berücksichtigung des Streubildes vonstatten gehen kann. Befindet sich der Scheibenstreuer daraufhin beispielsweise wieder in ebenem Gelände, so kann die Verteilerscheibe wieder in die Horizontale mit vertikaler Drehachse geneigt werden.

In der Praxis kann dies beispielsweise dadurch geschehen, dass in der Steuer- und/oder Regeleinrichtung der Neigungsverstelleinrichtung Korrekturfunktionen hinterlegt werden, welche den Neigungswinkel der Verteilerscheibe um die senkrecht zur Fahrtrichtung - und im Wesentlichen horizontal, d.h. in der Erstreckungsebene des Scheibenstreuers - angeordnete Schwenkachse und/oder um die parallel zur Fahrtrichtung angeordnete Schwenkachse verändern, wenn der Scheibenstreuer über Krümmungen des Bodens hinweg und/oder an diesen entlang fährt, wie es weiter unten unter Bezugnahme auf die Zeichnungen exemplarisch erläutert ist. Mit "nahe einer Krümmung des Bodens" sind im Übrigen Abstände des Scheibenstreuers von der Scheitellinie einer Bodenkrümmung einerseits - in Fahrtrichtung betrachtet - bis zur maximalen Wurfweite, andererseits - senkrecht zur Fahrtrichtung betrachtet - bis zur halben Streubreite angesprochen.

Nachdem es sich anlässlich von Streuversuchen zur Kompensation von Streufehlern als zweckdienlich erwiesen hat, wenn

- bei der Fahrt an oder nahe einer Krümmung des Bodens oder bei der Überfahrt einer Krümmung des Bodens, welche eine vornehmlich senkrecht zur Fahrtrichtung des Scheibenstreuers angeordnete Scheitellinie aufweist, die Verteilerscheibe um einen Winkel um die im Wesentlichen senkrecht zur Fahrtrichtung angeordnete Schwenkachse geneigt wird, welcher kleinergleich dem Krümmungswinkel der überfahrenen Krümmung des Bodens beträgt; und/oder

- bei der Fahrt an oder nahe einer Krümmung des Bodens oder bei der Überfahrt einer Krümmung des Bodens, welche eine vornehmlich parallel zur Fahrtrichtung angeordnete Scheitellinie aufweist, die Verteilerscheibe um einen Winkel um die im Wesentlichen parallel zur Fahrtrichtung angeordnete Schwenkachse geneigt wird, welcher kleinergleich dem Krümmungswinkel der Krümmung des Bodens beträgt, ist der eingestellte Neigungswinkel der Verteilerscheibe folglich stets kleiner als der Krümmungswinkel des Bodens, um einerseits die gemäß dem Stand der Technik verursachten Streufehler zu kompensieren und andererseits keine zusätzlichen Streufehler zur verursachen, wie sie bei einer übermäßigen Neigung der Verteilerscheibe erzeugt werden könnten.

Ferner hat es sich als vorteilhaft erwiesen, wenn

- bei der Fahrt an oder nahe einer Krümmung des Bodens oder bei der Überfahrt einer Krümmung des Bodens, welche eine vornehmlich senkrecht zur Fahrtrichtung des Scheibenstreuers angeordnete Scheitellinie aufweist, die Verteilerscheibe derart um die im Wesentlichen senkrecht zur Fahrtrichtung angeordnete Schwenkachse geneigt wird, dass sie im Wesentlichen parallel zur Neigung des Bodens an einer unter einem Abstand hinter dem Scheibenstreuer befindlichen Stelle angeordnet ist, welcher kleiner als die minimale Wurfweite und größer als die maximale Wurfweite ist, wobei der Abstand insbesondere etwa der mittleren Wurfweite entspricht, und/oder

- bei der Fahrt an oder nahe einer Krümmung des Bodens oder bei der Überfahrt einer Krümmung des Bodens, welche eine vornehmlich parallel zur Fahrtrichtung des Scheibenstreuers angeordnete Scheitellinie aufweist, die Verteilerscheibe um einen Winkel um die im Wesentlichen parallel zur Fahrtrichtung angeordnete Schwenkachse geneigt wird, welcher umso größer ist, je näher sich der Scheibenstreuer an der Scheitellinie der Krümmung befindet, und welcher umso kleiner ist, je weiter sich der Scheibenstreuer von der Scheitellinie der Krümmung entfernt befindet.

Im erstgenannten Falle der Fahrt über eine vornehmlich senkrecht zur Fahrtrichtung angeordnete Scheiteillinie der Bodenkrümmung kann folglich die um die etwa horizontale Schwenkachse senkrecht zur Fahrtrichtung angeordnete Neigung der Verteilerscheibe, insbesondere fortwährend, etwa an die Neigung des Bodens dort, wo der Streufächer abgelegt wird, angepasst werden. Als hierfür maßgeblich heranzuziehender Neigungswinkel bietet sich vorzugsweise jener an, welcher der Boden an einer Stelle aufweist, welcher etwa um die mittlere Wurfweite von der aktuellen Position des Scheibenstreuers beabstandet ist, wobei die mittlere Wurfweite durch den Abstand des Schwerpunktes des auf dem Boden abgelegten, dreidimensionalen Streubildes vom Mittelpunkt der Verteilerscheibe - bzw. im Falle eines Zweischeibenstreuers vom Mittelpunkt des Abstandes zwischen den beiden Verteilerscheiben - definiert ist. Im letztgenannten Falle der Fahrt entlang einer vornehmlich parallel zur Fahrtrichtung angeordneten Scheitellinie der Bodenkrümmung sollte der Neigungswinkel der Verteilerscheibe an seinen aktuellen seitlichen Abstand von der Scheitellinie angepasst werden.

Während es im Hinblick auf einen in konstruktiver Hinsicht möglichst einfachen Aufbau des Scheibenstreuers erwünscht sein kann, die Verteilerscheibe nur um eine einzige Schwenkachse, wie insbesondere um ihre senkrecht zur Fahrtrichtung angeordnete und horizontale (sofern sich der Scheibenstreuer in der Horizontalen befindet) Schwenkachse, zu neigen und den sich infolge von Bodenkrümmungen mit vornehmlich parallel zur Fahrtrichtung angeordneter Scheitellinie ergebenden Streufehlern gegebenenfalls durch alternative Maßnahmen als die Neigung der Verteilerscheibe um die weitere Schwenkachse zu begegnen (siehe hierzu auch weiter unten), ist es selbstverständlich möglich, dass bei der Fahrt an oder nahe einer Krümmung des Bodens oder bei der Überfahrt einer Krümmung des Bodens, welche eine sowohl senkrecht als auch parallel zur Fahrtrichtung angeordnete Erstreckungsrichtungskomponente aufweist, die Verteilerscheibe sowohl um die senkrecht zur Fahrtrichtung angeordnete Schwenkachse als auch um die parallel zur Fahrtrichtung angeordnete Schwenkachse geneigt wird. Die jeweiligen Neigungswinkel der Verteilerscheibe ergeben sich in diesem Fall beispielsweise aus der jeweiligen Neigungswinkelkomponente des Bodens senkrecht bzw. parallel zur Fahrtrichtung, wobei entsprechende, z.B. in der Steuer- und/oder Regeleinrichtung des Scheibenstreuers hinterlegte Korrekturfunktionen einerseits für die Neigung der Verteilerscheibe um die senkrecht zur Fahrtrichtung angeordnete Schwenkachse, andererseits für die Neigung der Verteilerscheibe um die parallel zur Fahrtrichtung angeordnete Schwenkachse, beispielsweise überlagert bzw. synchron durchgeführt werden können.

Wie bereits angedeutet, hängt eine ideale Kompensation von Streufehlern, wie sie sich bei der Fahrt an oder nahe einer Krümmung des Bodens oder bei der Überfahrt über - konvexe oder konkave - Krümmungen des Bodens mit vornehmlich senkrecht zur Fahrtrichtung angeordneter Scheitellinie und/oder mit vornehmlich parallel zur Fahrtrichtung angeordneter Scheitellinie ergeben, von einer Vielzahl an Parametern ab, welche berücksichtigt werden sollten, um eine für die jeweilige Streusituation ideale Kompensation zu erhalten, wobei es in der Praxis in vielen Fällen ausreichen kann, nur einige dieser Parameter zu berücksichtigen und relativ geringe Streufehler aus wirtschaftlichen Gründen in Kauf zu nehmen. Als wesentliche Parameter, welche vorteilhafterweise berücksichtigt werden sollten, seien exemplarisch die physikalischen Eigenschaften des Streugutes, welche wiederum für seine aerodynamischen Flugeigenschaften verantwortlich sind, die Scheibendrehzahl sowie deren Geometrie, welche für die Geschwindigkeit verantwortlich ist, mit welcher die Streugutpartikel etwa tangential von den Verteilerscheiben abgeworfen werden, die Topologie des Bodens, wie insbesondere dessen Neigungswinkel und Krümmungsradien einschließlich der Lage ihrer Scheitellinien sowie die geometrischen Abmessungen des Scheibenstreuers bzw. des aus Zugmaschine bzw. Traktor und Scheibenstreuer gebildeten Gespanns - sei es ein an dem Dreipunkt-Kraftheber der Zugmaschine angebauter Scheibenstreuer oder sei es ein von der Zugmaschine gezogener, selbstfahrender Scheibenstreuer - erwähnt, welches seinerseits in Neigung versetzt wird, wenn er bzw. es Krümmungen des Bodens überfährt. Darüber hinaus ist insbesondere für die Lage der Schaltpunkte der Neigungsverstelleinrichtung, an welche diese die jeweilige Neigung der Verteilerscheibe in die erforderliche Richtung verändert, die Fahrtrichtung des Scheibenstreuers in Bezug auf die Bodenkrümmung (hangauf- bzw. hangabwärts) sowie

-    sofern sich der Scheibenstreuer selbst gerade auf einer in Bezug auf die Horizontalebene geneigten Ebene befindet - die aktuelle Neigung des Scheibenstreuers entscheidend, die erforderlichenfalls kompensiert werden muss. In vorteilhafter Ausgestaltung kann daher vorgesehen sein, dass

-    die Schaltpunkte, an welchen der Neigungswinkel der Verteilerscheibe um die senkrecht zur Fahrtrichtung angeordnete Schwenkachse und/oder um die parallel zur Fahrtrichtung angeordnete Schwenkachse verstellt wird (qualitative Kompensation), und/oder

-    der Winkelbetrag, um welchen der Neigungswinkel der Verteilerscheibe um die senkrecht zur Fahrtrichtung angeordnete Schwenkachse und/oder um die parallel zur Fahrtrichtung angeordnete Schwenkachse verstellt wird (quantitative Kompensation), und/oder

-    der Gradient der Veränderung des Neigungswinkels, d.h. der Gradient, mit welchem der jeweilige Neigungswinkel der Verteilerscheibe um die Schwenkachse senkrecht und/oder in Fahrtrichtung im zeitlichen Verlauf bzw. positionsabhängig verändert wird (sukzessive quantitative Kompensation),
in Abhängigkeit wenigstens eines Parameters aus der Gruppe

5

- Neigungswinkeldifferenz der Krümmung des Bodens,
- Krümmungsradius der Krümmung des Bodens,
- Position der Scheitellinie Krümmung des Bodens in Bezug auf den Scheibenstreuer,
- Fahrtrichtung in Bezug auf die Krümmung des Bodens,
- Drehzahl der Verteilerscheibe,
- Geometrie der Verteilerscheibe und/oder deren Wurfflügel, also beispielsweise des Verteilerscheiben- bzw. Wurfflügeltyps,
- Neigung des Scheibenstreuers,
- physikalische Eigenschaften des Streugutes,
- Arbeitsbreite,
- Abmessungen des Scheibenstreuers und/oder einer Zugmaschine desselben,
- Neigungsgeschwindigkeit der Verteilerscheibe und
- Fahrgeschwindigkeit

ermittelt und insbesondere in einer der Neigungsverstelleinrichtung der Verteilerscheibe zugeordneten Steuer- und/oder Regeleinrichtung hinterlegt werden. Dies kann beispielsweise anhand einer Mehrzahl an Kompensationsfunktionen für den Neigungswinkel der Verteilerscheibe gegenüber ihrer horizontalen Normalstellung erfolgen, welche experimentell oder mittels Simulationsrechenverfahren für die jeweils zu berücksichtigenden Parameter ermittelt worden sind und z. B. bedarfsweise abgerufen werden können.

Gemäß einer bevorzugten Ausgestaltung kann in diesem Zusammenhang vorgesehen sein, dass

- die Schaltpunkte, an welchen der Neigungswinkel der Verteilerscheibe um die senkrecht zur Fahrtrichtung angeordnete Schwenkachse und/oder um die parallel zur Fahrtrichtung angeordnete Schwenkachse verstellt wird (qualitative Kompensation), und/oder
- der Winkelbetrag, um welchen der Neigungswinkel der Verteilerscheibe um die senkrecht zur Fahrtrichtung angeordnete Schwenkachse und/oder um die parallel zur Fahrtrichtung angeordnete Schwenkachse verstellt wird (quantitative Kompensation), und/oder
- der Gradient der Veränderung des Neigungswinkels, d.h. der Gradient, mit welchem der jeweilige Neigungswinkel der Verteilerscheibe um die Schwenkachse senkrecht und/oder in Fahrtrichtung im zeitlichen Verlauf bzw. positiönsabhängig verändert wird (sukzessive quantitative Kompensation),

in Abhängigkeit eines Kennwertes für die Flugeigenschaften des Streugutes, insbesondere in Abhängigkeit von dessen mittleren Wurfweite und/oder von der Arbeitsbreite, ermittelt und wiederum insbesondere in der der Neigungsverstelleinrichtung der Verteilerscheibe zugeordneten Steuer- und/oder Regeleinrichtung hinterlegt werden. Die mittlere Wurfweite stellt folglich ein vorteilhaftes Beispiel eines zu berücksichtigenden Parameters in Bezug auf die Neigungsverstellung der Verteilerscheibe um die senkrecht zur Fahrtrichtung angeordnete Schwenkachse dar, in welchen insbesondere die Drehzahl sowie der Typ der Verteilerscheibe(n) und die physikalischen Eigenschaften des Streugutes eingehen. Die Arbeitsbreite stellt ein vorteilhaftes Beispiel eines zu berücksichtigenden Parameters in Bezug auf die Neigungsverstellung der Verteilerscheibe um die parallel zur Fahrtrichtung angeordnete Schwenkachse dar, in welchen gleichfalls insbesondere die Drehzahl und der Typ der Verteilerscheibe(n) und die physikalischen Eigenschaften des Streugutes eingehen. Für verschiedene Düngertypen mit ähnlichen physikalischen Eigenschaften - oder genauer: Flugeigenschaften - können somit entsprechende Kompensationsfunktionen für verschiedenartige Krümmungsgeometrien des Bodens hinterlegt werden.

In Bezug auf die Neigungsverstellung der Verteilerscheibe um die senkrecht zur Fahrtrichtung angeordnete (horizontale) Schwenkachse kann gemäß einer einfache und kostengünstigen Ausführungsform beispielsweise vorgesehen sein, dass die Verteilerscheibe dadurch um die im Wesentlichen senkrecht zur Fahrtrichtung angeordnete Schwenkachse geneigt wird, indem das gesamte Streuwerk (also die gesamte, aus Dosierorgan und Verteilerscheibe gebildete Einheit) oder der gesamte Scheibenstreuer, insbesondere mittels des Oberlenkers eines Dreipunkt-Krafthebers einer ihn tragenden Zugmaschine, wie z.B. eines Traktors, geneigt wird, wobei die Neigungsverstelleinrichtung im letztgenannten Fall folglich nicht notwendigerweise an dem Scheibensteuer selbst, sondern an der Zugmaschine vorgesehen sein und insbesondere mit der Steuer- und/oder Regeleinrichtung des Scheibenstreuers kommunizieren kann. Stattdessen kann zu diesem Zweck vorgesehen sein, dass nur die schwenkbar mit ihrem Antriebsstrang in Verbindung stehende Verteilerscheibe geneigt wird. Letzteres kann in entsprechender Weise auch in Bezug auf eine Neigung der Verteilerscheibe um die im Wesentlichen parallel zur Fahrtrichtung angeordnete Schwenkachse der Fall sein, wobei es auch hier ferner möglich ist, dass die Verteilerscheibe dadurch um die im Wesentlichen parallel zur Fahrtrichtung angeordnete Schwenkachse geneigt wird, indem das gesamte Streuwerk oder der gesamte Scheibenstreuer, insbesondere mittels der beiden Unterlenkerstreben eines Dreipunkt-Krafthebers einer ihn tragenden Zugmaschine, bedarfsweise in Neigung versetzt wird. Auch dann muss die Neigungsverstelleinrichtung folglich nicht notwendigerweise an dem Scheibensteuer selbst, sondern kann an der Zugmaschine vorgesehen sein und insbesondere mit der Steuer- und/oder Regeleinrichtung des Scheibenstreuers kommunizieren, wobei die Unterlenkerstreben beispielsweise nach Art von Kolben-/Zylindereinheiten teleskopierbar ausgestaltet sein können, um sie unabhängig voneinander zu betätigen und auf diese Weise für die seitliche Neigung des hieran festgelegten Scheibenstreuers zu sorgen.

Um die Schaltpunkte der Neigungsverstelleinrichtung bei der Fahrt nahe von Bodenkrümmungen bzw. über diese hinweg während der Streuarbeit möglichst exakt auslösen zu können und dabei vorzugsweise eine im Wesentlichen kontinuierliche Neigungsverstellung zu gewährleisten, bietet es sich an, dass die aktuelle Position des Scheibenstreuers in Bezug auf Krümmungen des Bodens mit sich verändernden Bodenneigung ermittelt wird. Dies kann insbesondere dadurch geschehen, dass

- eine elektronische Feldkarte, welche zumindest die Topologie des Bodens (d.h. beispielsweise die Scheitellinien, die Krümmungsradien, die Neigungswinkel und dergleichen) umfasst und ferner selbstverständlich auch die geforderten Applikationsraten innerhalb eines Feldes etc. umfassen kann, bereitgestellt, die Position des Scheibenstreuers mittels eines Positionserfassungssystems, wie z.B. mittels eines satellitengestützten GPS-Systems oder dergleichen, bestimmt und mit der Feldkarte abgeglichen wird; oder
- die Topologie des Bodens (d.h. wiederum beispielsweise die Scheitellinien, die Krümmungsradien, die Neigungswinkel und dergleichen) mittels wenigstens eines dem Scheibenstreuer zugeordneten Sensors ermittelt wird.

Letzteres kann folglich mehr oder minder in Echtzeit während der Streuarbeit geschehen, wobei als Beispiele geeigneter Sensoren exemplarisch optische Sensoren einschließlich 3D-Laserscannern und Kameras, Radarsensoren und Neigungssensoren erwähnt seien, welche nicht notwendigerweise an dem Scheibenstreuer und/oder an dessen Zugmaschine selbst angeordnet sein müssen, sondern beispielsweise auch stationär auf dem zu bearbeitenden Feld aufgestellt oder/und beweglich, z.B. an Drohnen oder dergleichen, vorgesehen sein können und drahtlos mit der Steuer- und/oder Regeleinrichtung des Scheibenstreuers kommunizieren.

Wie bereits angedeutet, eignet sich das erfindungsgemäße Verfahren insbesondere, wenn auch nicht ausschließlich, zur Implementierung an üblichen Zweischeibenstreuern, welche wenigstens zwei mit seitlichem Abstand voneinander angeordnete Verteilerscheiben und üblicherweise je ein einer jeweiligen Verteilerscheibe zugeordnetes Dosierorgan aufweisen. Ein erfindungsgemäßer Zweischeibenstreuer umfasst dabei insbesondere

- je eine, einer jeweiligen Verteilerscheibe zugeordnetete Neigungsverstelleinrichtung oder
- eine den Verteilerscheiben gemeinsame Neigungsverstelleinrichtung,

wobei die Neigungsverstelleinrichtung(en), welche im Übrigen beispielsweise in der vorstehend beschriebenen Weise an dem Zweischeibenstreuer selbst oder auch an einer Zugmaschine desselben, wie insbesondere an deren Dreipunkt-Kraftheber, verwirklicht sein können, mittels der Steuer- und/oder Regeleinrichtung betätigbar ist bzw. sind.

Im Falle eines solchen Zweischeibenstreuers kann beispielsweise vorgesehen sein, dass bei der Fahrt an oder nahe einer Krümmung des Bodens oder bei der Überfahrt einer Krümmung des Bodens, welche eine Scheitellinie mit einer parallel zur Fahrtrichtung des Scheibenstreuers angeordnete Erstreckungsrichtungskomponente aufweist, nur die der Krümmung des Bodens zugewandte Verteilerscheibe um die im Wesentlichen parallel zur Fahrtrichtung angeordnete Schwenkachse geneigt wird, während die andere Verteilerscheibe auf der der Krümmung des Bodens abgewandten Seite hinsichtlich ihrer Neigung unverändert bleibt, um das Streubild auf der der Bodenkrümmung abgewandten Seite hinsichtlich der im Zuge des Anschlussfahrens üblicherweise angestrebten gleichförmigen Überlappung der nebeneinander abgelegten Streufächer nicht zu verändern.

Wie bereits angedeutet, kann bei einem solchen Zweischeibenstreuer im Hinblick auf eine möglichst einfache und kostengünstige Ausgestaltung desselben darüber hinaus eine Neigbarkeit der Verteilerscheiben nur um die (horizontale) Achse senkrecht zur Fahrtrichtung vorgesehen sein, so dass die Verteilerscheiben nur bei der Fahrt an oder nahe einer Krümmung des Bodens oder bei der Überfahrt einer Krümmung des Bodens, welche eine Scheitellinie mit einer senkrecht zur Fahrtrichtung des Scheibenstreuers angeordnete Erstreckungsrichtungskomponente aufweist, um eine im Wesentlichen senkrecht zur Fahrtrichtung angeordnete Schwenkachse geneigt werden. Um gleichwohl Streufehlern, wie sie sich bei Bodenkrümmungen mit in Bezug auf die Fahrtrichtung vornehmlich paralleler Scheitellinie ergeben können, begegnen zu können, kann anstelle der Neigungsverstellung der Verteilerscheiben um die parallel zur Fahrtrichtung angeordnete Schwenkachse z.B. bei der Fahrt an oder nahe einer Krümmung des Bodens oder bei der Überfahrt einer Krümmung des Bodens oder bei der Überfahrt einer Krümmung des Bodens, welche eine Scheitellinie mit einer parallel zur Fahrtrichtung des Scheibenstreuers angeordnete Erstreckungsrichtungskomponente aufweist, ferner das Streubild in Richtung des ansteigenden Hangs und/oder entgegen der Richtung des abfallenden Hangs verlagert wird, wobei selbstverständlich beide vorgenannten Maßnahmen zugleich getroffen werden können, wenn sich der Zweischeibenstreuer z.B. bereits an einem Hang befindet und hierdurch gegenüber der Horizontalen geneigt angeordnet ist, oder es kann freilich auch nur eine der beiden vorgenannten Maßnahmen getroffen werden, wenn sich der Zweischeibenstreuer z.B. etwa in der Horizontalen befindet und auf einer der Seiten rechts bzw. links zur Fahrtrichtung ein abfallendes oder ansteigendes Gefälle vorliegt, so dass das Streubild nur auf der Seite des abfallenden bzw. ansteigenden Gefälles verändert wird.

Zu diesem Zweck kann es sich beispielsweise anbieten, dass

(a) die Drehzahl der hangoberen Verteilerscheibe gegenüber der Normdrehzahl erhöht und/oder die Drehzahl der hangunteren Verteilerscheibe gegenüber der Normdrehzahl vermindert wird; und/oder

(b) der Aufgabepunkt des Streugutes auf die hangobere Verteilerscheibe nach innen und/oder der Aufgabepunkt auf die hanguntere Verteilerscheibe nach außen verlagert wird; und/oder

(c)

- der Aufgabepunkt des Streugutes auf die hangobere Verteilerscheibe in Drehrichtung dieser Verteilerscheibe und/oder der Aufgabepunkt des Streugutes auf die hanguntere Verteilerscheibe entgegen der Drehrichtung dieser Verteilerscheibe verlagert wird, sofern es sich um einen Zweischeibenstreuer handelt, bei welchem die beiden Verteilerscheiben in einer Drehrichtung in ihrer Mitte zwischen den beiden Verteilerscheiben entgegen der Fahrtrichtung drehangetrieben sind; oder
- der Aufgabepunkt des Streugutes auf die hangobere Verteilerscheibe entgegen der Drehrichtung dieser Verteilerscheibe und/oder der Aufgabepunkt des Streugutes auf die hanguntere Verteilerscheibe in Drehrichtung dieser Verteilerscheibe verlagert wird, sofern es sich um einen Zweischeibenstreuer handelt, bei welchem die beiden Verteilerscheiben in einer Drehrichtung in ihrer Mitte zwischen den beiden Verteilerscheiben in Fahrtrichtung drehangetrieben sind.

Die letztgenannten Vorgehensweisen unter obigem Buchstabe (b) und (c) sind, sofern sie an beiden Verteilerscheiben zugleich durchgeführt werden, in Bezug auf die Fahrt quer zu einem geneigten Hang, also vornehmlich unter Schrägneigung des Scheibenstreuers um eine Achse parallel zur Fahrtrichtung entlang einer Höhenlinie, als solche aus der eingangs zitierten EP 2 415 338 B1 bekannt. Was die Verlagerung des Aufgabepunktes in bzw. entgegen der Drehrichtung der Verteilerscheiben unter obigem Buchstabe (c) betrifft, so hängt diese von der Antriebsweise der Verteilerscheiben ab. Während bei einem üblichen Zweischeibenstreuer, bei welchem die beiden Verteilerscheiben in einer Drehrichtung in ihrer Mitte zwischen den Scheiben entgegen der Fahrtrichtung angetrieben sind (d.h. von oben betrachtet dreht sich die in Fahrtrichtung linke Verteilerscheibe im Uhrzeigersinn und die in Fahrtrichtung rechte Verteilerscheibe entgegen dem Uhrzeigersinn), existieren in der Praxis auch andere Typen von Zweischeibenstreuern mit einer Drehrichtung der Verteilerscheiben in ihrer Mitte in Fahrtrichtung (d.h. von oben betrachtet dreht sich die in Fahrtrichtung linke Verteilerscheibe entgegen dem Uhrzeigersinn und die in Fahrtrichtung rechte Verteilerscheibe im Uhrzeigersinn). Letzterer Streuertyp erfordert zur Verlagerung seines Streubildes in Richtung des ansteigenden Hangs bzw. vom abfallenden Hang fort, dass der Aufgabepunkt des Streugutes auf die hangobere Verteilerscheibe nach innen und/oder entgegen der Drehrichtung dieser Verteilerscheibe bzw. der Aufgabepunkt des Streugutes auf die hanguntere Verteilerscheibe nach außen und/oder in Drehrichtung dieser Verteilerscheibe verstellt wird, während es bei ersterem und üblicherem Streuertyp zur Verlagerung seines Streubildes in Richtung des ansteigenden Hangs bzw. vom abfallenden Hang fort vonnöten ist, dass der Aufgabepunkt des Streugutes auf die hangobere Verteilerscheibe nach innen und/oder in Drehrichtung dieser Verteilerscheibe bzw. der Aufgabepunkt des Streugutes auf die hanguntere Verteilerscheibe nach außen und/oder entgegen der Drehrichtung dieser Verteilerscheibe verstellt wird. Entsprechende Einrichtungen zur Verstellung des Aufgabepunktes des Streugutes auf die Verteilerscheiben von gattungsgemäßen Zweischeibenstreuern sind aus dem Stand der Technik bekannt, so beispielsweise aus der EP 2 057 876 A1 oder aus der EP 2 742 790 B1.

Weitere Merkmale und Vorteile der Erfindung ergeben sich aus der nachfolgenden Beschreibung von Ausführungsbeispielen unter Bezugnahme auf die Zeichnungen. Dabei zeigen:

Fig. 1A  eine schematische Ansicht einer Situation, bei welcher ein Zweischeibenstreuer (nicht gezeigt) eine konkave Bodenkrümmung mit einer senkrecht zur Fahrtrichtung angeordneten Scheitellinie (bei x = 0) hangauf- und hangabwärts überfährt;

Fig. 1B  ein Schaubild der dreidimensionalen Streugutverteilung auf dem Boden, wie sie sich bei der Situation der Fig. 1A anlässlich der parallelen Anschlussfahrten des Zweischeibenstreuers gemäß dem Stand der Technik einstellt;

Fig. 1C  ein Schaubild der Streugutverteilung auf dem Boden entlang der von dem Zweischeibenstreuer entsprechend Fig. 1A in positiver x-Richtung bzw. hangaufwärts durchfahrenen Fahrgasse, wie sie in Fig. 1B mit einem Rechteck umrandet ist, gemäß dem Stand der Technik;

Fig. 1D    ein Ausführungsbeispiel einer Kompensationsfunktion zur Steuerung bzw. Regelung des Neigungswinkels der Verteilerscheiben um eine senkrecht zur Fahrtrichtung und parallel zur Scheitellinie der Bodenkrümmung angeordnete Schwenkachse;

Fig. 1E    eine dem in Fig. 1B rechteckig umrandeten Ausschnitt des Schaubildes der dreidimensionalen Streugutverteilung entsprechende Detailansicht, aber nachdem die Verteilerscheiben gemäß der Kompensationsfunktion der Fig. 1D um die senkrecht zur Fahrtrichtung angeordnete Schwenkachse geneigt worden sind;

Fig. 1F    ein der Fig. 1C entsprechendes Schaubild der Streugutverteilung auf dem Boden entlang der von dem Zweischeibenstreuer in positiver x-Richtung bzw. hangaufwärts durchfahrenen Fahrgasse, aber nachdem die Verteilerscheiben gemäß der Kompensationsfunktion der Fig. 1D um die senkrecht zur Fahrtrichtung angeordnete Schwenkachse geneigt worden sind;

Fig. 1G    ein Ausführungsbeispiel einer weiteren Kompensationsfunktion zur Steuerung bzw. Regelung des Neigungswinkels der Verteilerscheiben um eine senkrecht zur Fahrtrichtung und parallel zur Scheitellinie der Bodenkrümmung angeordnete Schwenkachse;

Fig. 1H    eine dem in Fig. 1B rechteckig umrandeten Ausschnitt des Schaubildes der dreidimensionalen Streugutverteilung entsprechende Detailansicht, aber nachdem die Verteilerscheiben gemäß der Kompensationsfunktion der Fig. 1G um die senkrecht zur Fahrtrichtung angeordnete Schwenkachse geneigt worden sind;

Fig. 1I    ein der Fig. 1C entsprechendes Schaubild der Streugutverteilung auf dem Boden entlang der von dem Zweischeibenstreuer in positiver x-Richtung bzw. hangaufwärts durchfahrenen Fahrgasse, aber nachdem die Verteilerscheiben gemäß der Kompensationsfunktion der Fig. 1G um die senkrecht zur Fahrtrichtung angeordnete Schwenkachse geneigt worden sind;

Fig. 2A    eine schematische Ansicht einer Situation, bei welcher ein Zweischeibenstreuer (nicht gezeigt) eine konvexe Bodenkrümmung mit einer senkrecht zur Fahrtrichtung angeordneten Scheitellinie (bei x = 0) hangauf- und hangabwärts überfährt;

Fig. 2B    ein Schaubild der dreidimensionalen Streugutverteilung auf dem Boden, wie sie sich bei der Situation der Fig. 2A anlässlich der parallelen Anschlussfahrten des Zweischeibenstreuers gemäß dem Stand der Technik einstellt;

Fig. 2C    ein Schaubild der Streugutverteilung auf dem Boden entlang der von dem Zweischeibenstreuer entsprechend Fig. 2A in positiver x-Richtung bzw. hangaufwärts durchfahrenen Fahrgasse, wie sie in Fig. 2B mit einem Rechteck umrandet ist, gemäß dem Stand der Technik;

Fig. 3A    eine schematische Ansicht einer Situation, bei welcher ein Zweischeibenstreuer (nicht gezeigt) nahe einer konkaven Bodenkrümmung mit einer parallel zur Fahrtrichtung angeordneten Scheitellinie (bei x = 0) fährt;

Fig. 3B    ein Schaubild der dreidimensionalen Streugutverteilung auf dem Boden, wie sie sich bei der Situation der Fig. 3A anlässlich der parallelen Anschlussfahrten des Zweischeibenstreuers gemäß dem Stand der Technik einstellt;

Fig. 3C    ein Schaubild der Streugutverteilung auf dem Boden senkrecht zu der von dem Zweischeibenstreuer entsprechend Fig. 3A in negativer y-Richtung (vgl. auch Fig. 3B) durchfahrenen Fahrgasse, wie sie in Fig. 3B mit einem Rechteck umrandet ist, gemäß dem Stand der Technik;

Fig. 3D    eine dem in Fig. 3B rechteckig umrandeten Ausschnitt des Schaubildes der dreidimensionalen Streugutverteilung entsprechende Detailansicht, aber nachdem die dem Hang zugewandte (linke) Verteilerscheibe des Zweischeibenstreuers gemäß einer der Kompensationsfunktion der Fig. 1D analogen Kompensationsfunktion um die parallel zur Fahrtrichtung angeordnete Schwenkachse geneigt worden ist, während die dem Hang abgewandte (rechte) Verteilerscheibe des sich etwa in der Horizontalen befindenden Zweischeibenstreuers nicht geneigt worden ist;

Fig. 3E    ein der Fig. 3C entsprechendes Schaubild der Streugutverteilung senkrecht zu der von dem Zweischeibenstreuer entsprechend Fig. 3A in negativer y-Richtung durchfahrenen Fahrgasse, aber nachdem die dem Hang zugewandte (linke) Verteilerscheibe des Zweischeibenstreuers gemäß der Kompensationsfunktion um die parallel zur Fahrtrichtung angeordnete Schwenkachse geneigt worden ist, während die dem Hang abgewandte (rechte) Verteilerscheibe nicht geneigt worden ist;

Fig. 4A    eine schematische Ansicht einer Situation, bei welcher ein Zweischeibenstreuer (nicht gezeigt) nahe einer konvexen Bodenkrümmung mit einer parallel zur Fahrtrichtung angeordneten Scheitellinie (bei x = 0) fährt;

Fig. 4B    ein Schaubild der dreidimensionalen Streugutverteilung auf dem Boden, wie sie sich bei der Situation der Fig. 4A anlässlich der parallelen Anschlussfahrten des Zweischeibenstreuers gemäß dem Stand der Technik einstellt; und

Fig. 4C    ein Schaubild der Streugutverteilung auf dem Boden senkrecht zu der von dem Zweischeibenstreuer entsprechend Fig. 4A in negativer y-Richtung (vgl. auch Fig. 4B) durchfahrenen Fahrgasse, wie sie in Fig. 4B mit einem Rechteck umrandet ist, gemäß dem Stand der Technik.

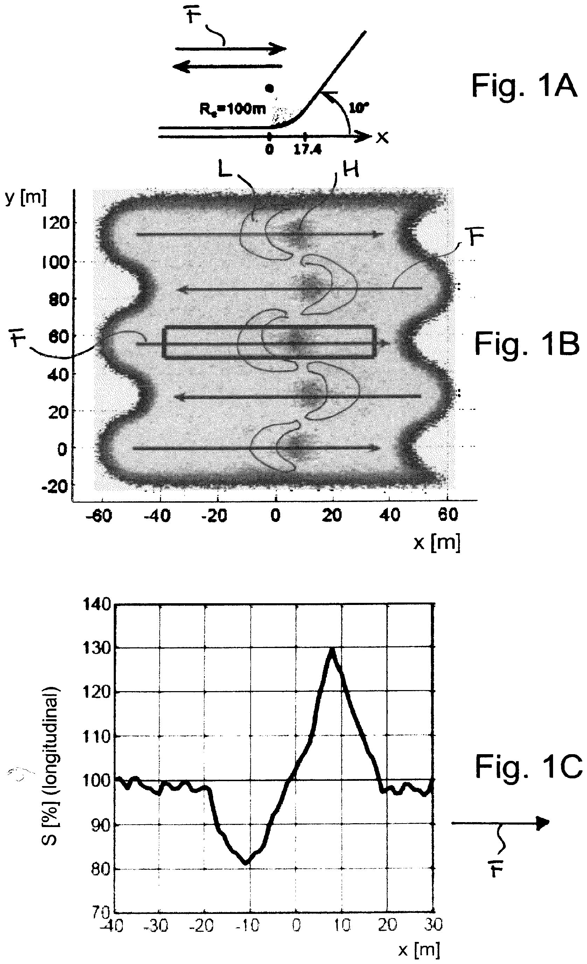

In der Fig. 1A ist eine Situation schematisch wiedergegeben, in welcher ein nicht zeichnerisch wiedergegebener Zweischeibenstreuer eine - hier konkave - Bodenkrümmung mit einer senkrecht zur Fahrtrichtung angeordneten Scheitellinie (bei x = 0) in positiver x-Richtung hangaufwärts bzw. in negativer x-Richtung hangabwärts überfährt, wie es dem üblichen Anschlussfahren entlang parallel auf dem zu bestreuenden Feld angelegter Fahrgassen entspricht. Im vorliegenden Fall erstreckt sich die Bodenkrümmung beispielsweise zwischen der Horizontalen und einem unter einem Winkel von etwa 10° nach oben geneigten Hang, wobei der Krümmungsradius der Bodenkrümmung etwa 100 m beträgt und sich die Krümmung folglich über einen x-Achsenabschnitt von 17,4 m erstreckt. Die Fahrtrichtung ist mit dem Bezugszeichen F gekennzeichnet.

In der Fig. 1B ist das Schaubild der dreidimensionalen Streugutverteilung auf dem Boden gezeigt, wie sie sich gemäß dem Stand der Technik, d.h. mit einem üblichen Zweischeibenstreuer ohne Neigungsverstelleinrichtung seiner Verteilerscheiben, einstellt, wenn der Zweischeibenstreuer alternierende Anschlussfahrten entsprechend der Situationen gemäß Fig. 1A (also einerseits entlang einer Fahrgasse hangaufwärts, andererseits entlang einer benachbarten Fahrgasse hangabwärts) über die konkave Bodenkrümmung hinweg durchführt. Es wurden hierzu in einer Testhalle für beide Fahrweisen (hangauf- und hangabwärts) dreidimensionale Streubilder erstellt, indem die von dem Zweischeibenstreuer in verschiedenen Relativpositionen in Bezug auf die Bodenkrümmung abgeworfenen Streugutpartikel eines bestimmten Streuguttyps in einer Vielzahl an Auffangschalen gesammelt, aus deren Massenverteilung in den abgeworfenen Streufächern je ein dreidimensionales Streubild erzeugt und diese in Fahrtrichtung aneinandergefügt worden sind, wonach sie mittels Simulationsrechenverfahren seitlich (jeweils für benachbarte Fahrgassen hangauf- und hangabwärts) überlappt worden sind, wie es beim Anschlussfahren die Regel ist, um eine gleichmäßige Streugutverteilung senkrecht zur Fahrtrichtung zu erzielen. Man erkennt, dass sich - in Fahrtrichtung F betrachtet - sowohl bei der Hangaufwärtsfahrt (in positiver x-Richtung) als auch bei der Hangabwärtsfahrt (in negativer x-Richtung) im Bereich der konkaven Bodenkrümmung zunächst ein Bereich der Unterdüngung L und sodann ein Bereich der Überdüngung H ergibt, welche eine in Bezug auf die Scheitellinie der Bodenkrümmung (bei x = 0) unterschiedliche Lage besitzen, was der Tatsache geschuldet ist, dass die Streufächer unter einem Abstand, der sogenannten Wurfweite, hinter dem Zweischeibenstreuer abgelegt werden. Die Bereiche der Unterdüngung L sind aufgrund der schwarz-/ weißen Darstellung nur sehr schwer erkennbar und daher nachträglich mit einer schematischen Umrandung versehen worden.

In der Fig. 1C ist ein Schaubild der Streugutverteilung S auf dem Boden (in [%] der Sollstreumenge) entlang einer von dem Zweischeibenstreuer entsprechend Fig. 1A hangaufwärts in x-Richtung durchfahrenen Fahrgassen gemäß dem Stand der Technik gezeigt, wie sie in der Fig. 1B mit einem Rechteck umrandet ist. Man erkennt auch hier einerseits den Bereich der Unterdüngung (hier: etwa 10 m vor der Scheitellinie der Bodenkrümmung mit bis zu etwa 20% Unterversorgung), andererseits den Bereich der Überdüngung (hier: etwa 10 m hinter der Scheitellinie der Bodenkrümmung mit bis zu etwa 30% Überversorgung), welche dem Bereich der Unterdüngung - in Fahrtrichtung F betrachtet - nachfolgt.

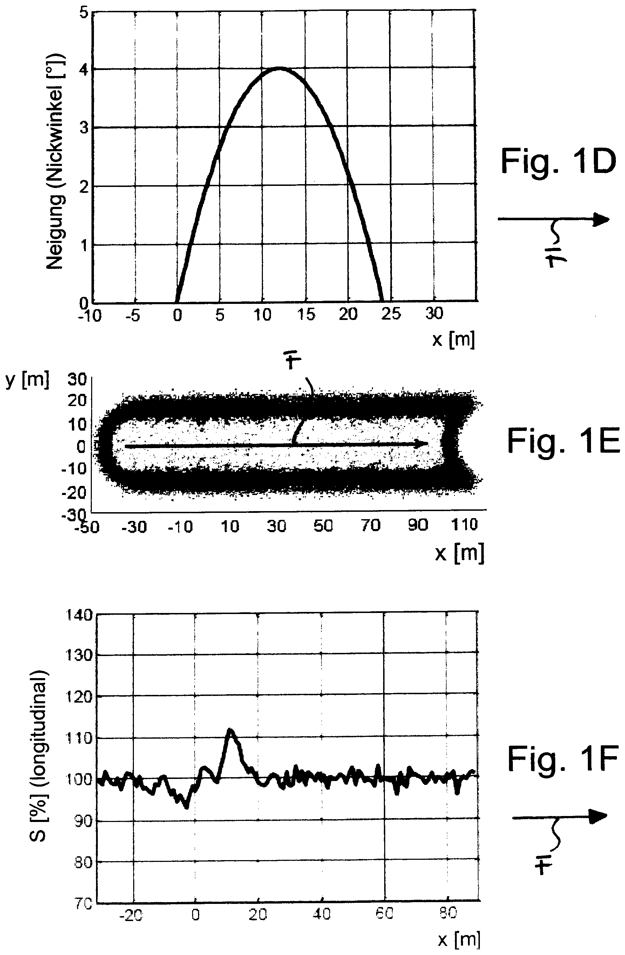

In der Fig. 1D ist ein Ausführungsbeispiel einer Kompensationsfunktion zur gemeinsamen Steuerung bzw. Regelung des Neigungswinkels beider Verteilerscheiben des Zweischeibenstreuers um eine senkrecht zur Fahrtrichtung und parallel zur Scheitellinie der Bodenkrümmung angeordnete Schwenkachse ("Nickachse") bei der Hangaufwärtsfahrt entsprechend dem Fahrweg der Fig. 1C dargestellt, welche mittels mathematischer Optimierung von in der oben geschilderten Weise erhaltenen dreidimensionalen Streubildern erzeugt worden ist. Während auf der x-Achse die Fahrtrichtung aufgetragen ist, ist auf der y-Achse der Neigungswinkel ("Nickwinkel") der Verteilerscheiben des Zweischeibenstreuers (bzw. des gesamten Zweischeibenstreuers mit dessen Verteilerscheiben) um diese Achse ("Nickachse") aufgetragen; ein positiver Neigungswinkel ("Nickwinkel") bedeutet eine Neigung der Verteilerscheiben mit ihrem - in Fahrtrichtung F betrachtet - vorderen Umfangsende nach oben bzw. mit ihrem - wiederum in Fahrtrichtung F betrachtet - rückwärtigen Umfangsende nach unten. Wie in der Fig. 1D erkennbar, handelt es sich bei der Kompensationsfunktion im vorliegenden Fall im Wesentlichen um eine umgekehrte Parabel mit einem maximalen Neigungswinkel der Verteilerscheiben um etwa 4°. Ferner ist erkennbar, dass mit der Verstellung des Neigungswinkels der Verteilerscheiben begonnen wird, sobald der Scheibenstreuer die Scheitellinie der Bodenkrümmung (bei x = 0) erreicht, wonach er in Schrägstellung versetzt wird, während die - ungeneigte - Normalstellung der Verteilerscheiben wieder erreicht wird, wenn sich der Scheibenstreuer - hier unter einem Abstand von etwa 24 m - hinter der Scheitellinie der Bodenkrümmung befindet. Es sei jedoch darauf hingewiesen, dass insbesondere letzterer Punkt die Wurfweite zu berücksichtigen hat und beispielsweise derart gewählt werden kann, dass er einem Abstand der Verteilerscheiben des Zweischeibenstreuers vom Krümmungsende (hier: 17,4 m jenseits der Scheitellinie) der Bodenkrümmung etwa entsprechend der mittleren Wurfweite beträgt.

Während die Fig. 1E eine dem in Fig. 1B rechteckig umrandeten Ausschnitt des Schaubildes der dreidimensionalen Streugutverteilung entsprechende Detailansicht mit Fahrtrichtung des Zweischeibenstreuers in positiver x-Richtung bzw. hangaufwärts zeigt, aber nachdem die Verteilerscheiben gemäß der Kompensationsfunktion der Fig. 1D um die senkrecht zur Fahrtrichtung angeordnete Schwenkachse ("Nickachse") geneigt worden sind, zeigt die Fig. 1F ein der Fig. 1C entsprechendes Schaubild der Streugutverteilung auf dem Boden entlang der von dem Zweischeibenstreuer in positiver x-Richtung bzw. hangaufwärts durchfahrenen Fahrgasse, aber gleichfalls nachdem die Verteilerscheiben gemäß der Kompensationsfunktion der Fig. 1D um die senkrecht zur Fahrtrichtung angeordnete Schwenkachse ("Nickachse") geneigt worden sind. Die zuvor gemäß dem Stand der Technik entstandenen Streufehler in Form von in Fahrtrichtung F hintereinander angeordneten Bereichen einer Unter- und einer Überdüngung sind infolge Neigung der Verteilerscheiben um die Nickachse gemäß der Kompensationsfunktion der Fig. 1D praktisch nicht mehr erkennbar, wobei im vormals unterdüngten Bereich eine Unterversorgung von nur noch maximal etwa 5% und im vormals überdüngten Bereich eine Überversorgung von nur noch maximal etwa 10% herrscht.

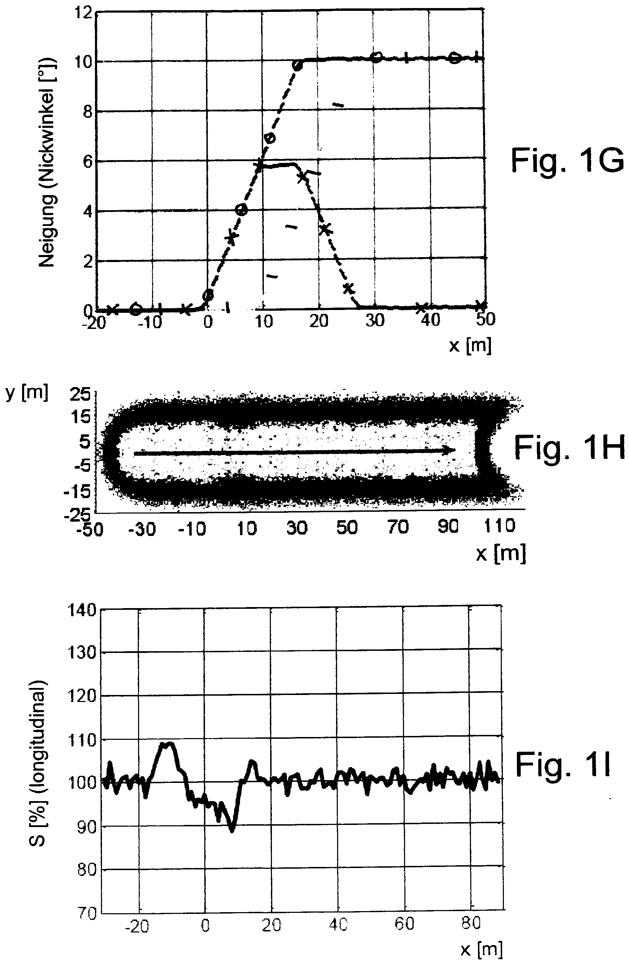

In der Fig. 1G ist ein Ausführungsbeispiel einer weiteren, zu jener gemäß Fig. 1D alternativen Kompensationsfunktion zur gemeinsamen Steuerung bzw. Regelung des Neigungswinkels beider Verteilerscheiben des Zweischeibenstreuers um eine senkrecht zur Fahrtrichtung und parallel zur Scheitellinie der Bodenkrümmung angeordnete Schwenkachse ("Nickachse") bei der Hangaufwärtsfahrt entsprechend dem Fahrweg der Fig. 1C dargestellt, welche unter Berücksichtigung der Erkenntnis, dass sich die Streufehler hauptsächlich einerseits aus der jeweiligen Bodenneigung, andererseits aus der Relativanordnung des Zweischeibenstreuers (bzw. eines aus Zugmaschine bzw. Traktor und Zweischeibenstreuers gebildeten Gespanns) in Bezug auf die Bodenneigung ergeben, auf analytischen Wege erzeugt worden ist, wobei der Kompensationsfunktion in diesem Fall die folgende Basisfunktion des Nickwinkels der Verteilerscheiben in Abhängigkeit des Fahrwegs x des Zweischeibenstreuers zugrunde gelegt worden ist:

$$\text{Nickwinkel } (x) = f \left[ \text{Nickwinkel}_{Streuer} - \text{Nickwinkel}_{Boden} (x-\Delta) \right]$$

Der Abstand $\Delta$ von der Stelle x, an welcher sich der Zweischeibenstreuer gerade befindet, bezeichnet dabei einen Abstand hinter dem Zweischeibenstreuer, welcher wiederum z.B. etwa entsprechend der mittleren Wurfweite gewählt werden kann.

In der Fig. 1G sind nun einerseits die obige Kompensationsfunktion des Nickwinkels x der Verteilerscheiben in Abhängigkeit des Fahrwegs x - oder genauer: in Abhängigkeit der aktuellen Position x des Zweischeibenstreuers entlang seinem Fahrweg in positiver x-Richtung über die Bodenkrümmung- , andererseits der Nickwinkel des Zweischeibenstreuers an der Position x und der Nickwinkel des Bodens an der Position (x-$\Delta$) für die Situation der Fig. 1A, 1B (rechteckförmig umrandeter Abschnitt) und 1C wiedergegeben, wobei:

--X-- : Kompensationsfunktion,
--O-- : Nickwinkel des Zweischeibenstreuers bei x, und
--I-- : Nickwinkel des Bodens bei (x-$\Delta$).

Man erkennt, dass die Kompensationsfunktion der Fig. 1G eine ähnliche Form besitzt wie jene der Fig. 1D, aber mit einem etwa linearen Anstieg bzw. Abfall der Winkelverstellung der Verteilerscheiben auf hier bis zu etwa 6° und mit einem flachen Maximum.

Während die Fig. 1H eine dem in Fig. 1B rechteckig umrandeten Ausschnitt des Schaubildes der dreidimensionalen Streugutverteilung entsprechende Detailansicht mit Fahrtrichtung des Zweischeibenstreuers in positiver x-Richtung bzw. hangaufwärts zeigt, aber nachdem die Verteilerscheiben gemäß der Kompensationsfunktion der Fig. 1G um die senkrecht zur Fahrtrichtung angeordnete Schwenkachse ("Nickachse") geneigt worden sind, zeigt die Fig. 1I ein der Fig. 1C entsprechendes Schaubild der Streugutverteilung auf dem Boden entlang der von dem Zweischeibenstreuer in positiver x-Richtung bzw. hangaufwärts durchfahrenen Fahrgasse, aber gleichfalls nachdem die Verteilerscheiben gemäß der Kompensationsfunktion der Fig. 1G um die senkrecht zur Fahrtrichtung angeordnete Schwenkachse ("Nickachse") geneigt worden sind. Die zuvor gemäß dem Stand der Technik entstandenen Streufehler in Form von in Fahrtrichtung F hintereinander angeordneten Bereichen einer Unter- und einer Überdüngung sind infolge Neigung der Verteilerscheiben um die Nickachse gemäß der Kompensationsfunktion der Fig. 1G wiederum praktisch nicht mehr erkennbar, wobei im vormals unterdüngten Bereich nun eine Überversorgung von nur maximal etwa 9% und im vormals überdüngten Bereich eine Unterversorgung von nur maximal etwa 10% herrscht. Die Werte sind folglich mit jenen, wie sie mittels der Kompensationsfunktion gemäß der Fig. 1D erhalten worden sind (vgl. hierzu die Fig. 1E und 1F) vergleichbar, wobei im Falle der Kompensationsfunktion der Fig. 1G eine demgegenüber geringfügige "Überkompensation" zu beobachten ist.

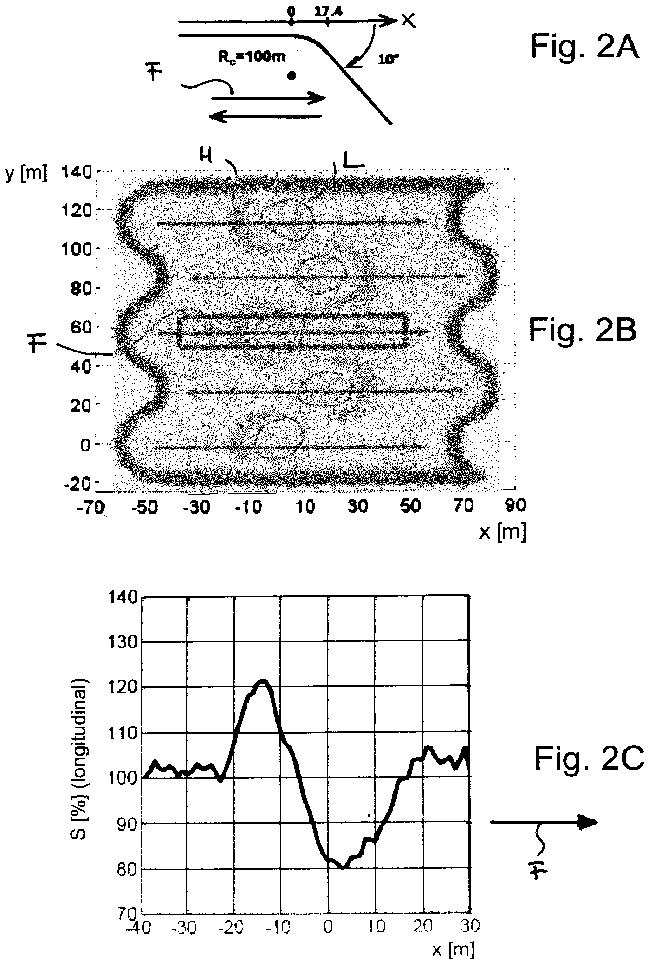

In der Fig. 2A ist eine Situation schematisch wiedergegeben, in welcher ein wiederum nicht zeichnerisch wiedergegebener Zweischeibenstreuer eine - hier konvexe - Bodenkrümmung mit einer senkrecht zur Fahrtrichtung angeordneten Scheitellinie (bei x = 0) in positiver x-Richtung hangabwärts bzw. in negativer x-Richtung hangaufwärts überfährt, wie es wiederum dem üblichen Anschlussfahren entlang parallel auf dem zu bestreuenden Feld angelegter Fahrgassen entspricht. Im vorliegenden Fall erstreckt sich die Bodenkrümmung beispielsweise zwischen der Horizontalen und einem unter einem Winkel von etwa 10° nach unten geneigten Hang, wobei der Krümmungsradius der Bodenkrümmung, insoweit entsprechend der Fig. 1A, etwa 100 m beträgt und sich die Krümmung folglich über einen x-Achsenabschnitt von 17,4 m erstreckt. Die Fahrtrichtung ist auch hier mit dem Bezugszeichen F gekennzeichnet.

In der Fig. 2B ist das Schaubild der dreidimensionalen Streugutverteilung auf dem Boden gezeigt, wie sie sich gemäß dem Stand der Technik, d.h. mit einem üblichen Zweischeibenstreuer ohne Neigungsverstelleinrichtung seiner Verteilerscheiben, einstellt, wenn der Zweischeibenstreuer alternierende Anschlussfahrten entsprechend der Situationen gemäß Fig. 2A (also einerseits entlang einer Fahrgasse hangaufwärts, andererseits entlang einer benachbarten Fahrgasse hangabwärts) über die konvexe Bodenkrümmung hinweg durchführt. Man erkennt, dass sich - in Fahrtrichtung F betrachtet - sowohl bei der Hangabwärtsfahrt (in positiver x-Richtung) als auch bei der Hangaufwärtsfahrt (in negativer x-Richtung) im Bereich der konvexen Bodenkrümmung bei Aufrechterhaltung einer stets senkrechten Drehachse der Verteilerscheiben in Bezug auf das Chassis des Zweischeibenstreuers ähnliche Bereichs der Unter- und Überdüngung ergeben wie dies bei der Überfahrt über konkave Bodenkrümmungen (vgl. hierzu die Fig. 1B) der Fall ist, aber in Fahrtrichtung F betrachtet in umgekehrter Abfolge, d.h. es ergibt sich in diesem Fall - in Fahrtrichtung F betrachtet - zunächst ein Bereich der Unterdüngung L und sodann ein Bereich der Überdüngung H, welche wiederum eine in Bezug auf die Scheitellinie der Bodenkrümmung (bei x = 0) unterschiedliche Lage besitzen, weil die Streufächer jeweils unter einem Abstand, der sogenannten Wurfweite, hinter dem Zweischeibenstreuer abgelegt werden.

In der Fig. 2C ist ein Schaubild der Streugutverteilung S auf dem Boden (in [%] der Sollstreumenge) entlang einer von dem Zweischeibenstreuer entsprechend Fig. 2A hangabwärts in x-Richtung durchfahrenen Fahrgassen gemäß dem Stand der Technik gezeigt, wie sie in der Fig. 2B mit einem Rechteck umrandet ist. Man erkennt auch hier einerseits den Bereich der Überdüngung (hier: etwa 15 m vor der Scheitellinie der Bodenkrümmung mit bis über 20% Überversorgung), andererseits den Bereich der Unterdüngung (hier: etwa 5 m hinter der Scheitellinie der Bodenkrümmung mit bis zu etwa 20% Unterversorgung), welche dem Bereich der Überdüngung - in Fahrtrichtung F betrachtet - nachfolgt.

Die Kompensation kann in diesem Fall unter Heranziehung von analogen Kompensationsfunktionen des Neigungswinkels der Verteilerscheiben (bzw. des gesamten Zweischeibenstreuers einschließlich dessen Verteilerscheiben) um die senkrecht zur Fahrtrichtung F angeordnete Schwenkachse erfolgen, wie sie oben unter Bezugnahme entweder auf die Fig. 1D oder auf die Fig. 1G im Einzelnen erläutert sind. Allerdings ist selbstverständlich dafür Sorge zu tragen, dass die Verteilerscheiben bei der Überfahrt über die konvexe Bodenkrümmung nicht, wie dies bei der konkaven Bodenkrümmung der Fall ist, mit ihrem - in Fahrtrichtung F betrachtet - vorderen Umfangsende nach oben bzw. mit ihrem - wiederum in Fahrtrichtung F betrachtet - rückwärtigen Umfangsende nach unten, sondern mit ihrem - in Fahrtrichtung F betrachtet - vorderen Umfangsende nach unten bzw. mit ihrem - wiederum in Fahrtrichtung F betrachtet - rückwärtigen Umfangsende nach oben geneigt werden, d.h. die ansonsten analoge Schwenkbewegung geht mit umgekehrter Schwenkrichtung vonstatten.

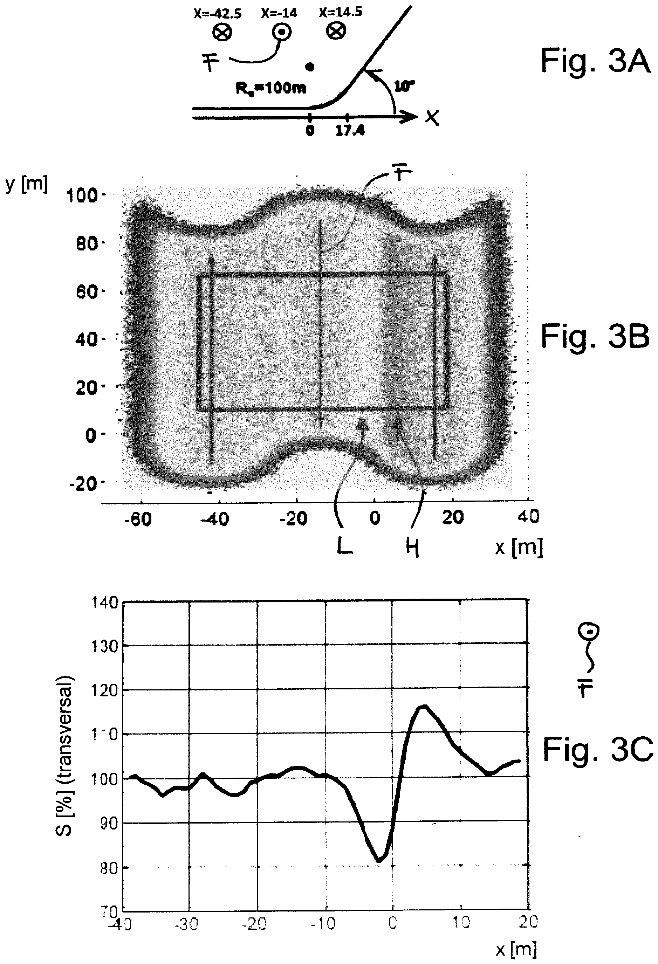

In der Fig. 3A ist eine Situation schematisch wiedergegeben, in welcher ein nicht zeichnerisch wiedergegebener Zweischeibenstreuer an einer - hier entsprechend der Fig. 1A konkaven - Bodenkrümmung mit einer parallel zur Fahrtrichtung angeordneten Scheitellinie (bei x = 0) sowohl in positiver y-Richtung als auch in negativer y-Richtung in Parallelhangfahrt entlang fährt, wie es dem üblichen Anschlussfahren entlang parallel auf dem zu bestreuenden Feld angelegter Fahrgassen entspricht. Im vorliegenden Fall erstreckt sich die Bodenkrümmung beispielsweise wiederum zwischen der Horizontalen und einem unter einem Winkel von etwa 10° nach oben geneigten Hang, wobei der Krümmungsradius der Bodenkrümmung etwa 100 m beträgt und sich die Krümmung folglich über einen x-Achsenabschnitt von 17,4 m erstreckt. Die in der Fig. 3A mittlere Fahrgasse verläuft beispielsweise unter einem Abstand von 14 m links, d.h. in negativer x-Richtung, von der Scheitellinie der Krümmung bei x = 0. Die benachbarten Fahrgassen sind unter einem der Arbeitsbreite entsprechenden Abstand von hier beispielsweise 28,5 m angeordnet. Die Fahrtrichtung ist mit dem Bezugszeichen F gekennzeichnet.

In der Fig. 3B ist das Schaubild der dreidimensionalen Streugutverteilung auf dem Boden gezeigt, wie sie sich gemäß dem Stand der Technik, d.h. mit einem üblichen Zweischeibenstreuer ohne Neigungsverstelleinrichtung seiner Verteilerscheiben, einstellt, wenn der Zweischeibenstreuer alternierende Anschlussfahrten entsprechend der Situationen gemäß Fig. 3A durchführt (also jeweils entlang einer Fahrgasse parallel zur Scheitellinie der konkaven Bodenkrümmung, aber unter verschiedenen Lateralabständen zu derselben). Man erkennt, dass sich - senkrecht zur Fahrtrichtung F betrachtet - bei der Fahrt parallel zur Scheitellinie der Bodenkrümmung (in y-Richtung) im hangseitigen Bereich der konkaven Bodenkrümmung zunächst ein streifenförmiger Bereich der Unterdüngung L und sodann ein hierzu parallel verlaufender, gleichfalls streifenförmiger Bereich der Überdüngung H ergibt.

In der Fig. 3C ist ein Schaubild der Streugutverteilung S auf dem Boden (in [%] der Sollstreumenge) senkrecht zu den von dem Zweischeibenstreuer entsprechend Fig. 3A parallel zur Scheitellinie der Bodenkrümmung in y-Richtung durchfahrenen Fahrgassen gemäß dem Stand der Technik gezeigt, wobei in der Fig. 3C die Streugutverteilung über einen x-Achsenabschnitt beidseitig der in Fig. 3A mittleren, hier 14 m von der Scheitellinie (bei x = 0) der Bodenkrümmung beabstandeten Fahrgasse von jeweils etwas mehr als der Arbeitsbreite von hier 28,5 m dargestellt ist, wie sie in der Fig. 3B mit einem Rechteck umrandet ist. Man erkennt auch in der Fig. 3C einerseits den Bereich der Unterdüngung L (hier: nahe der Scheitellinie der Bodenkrümmung mit einem Minimum an deren dem ansteigenden Hang abgewandten Seite mit bis zu etwa 20% Unterversorgung), andererseits den Bereich der Überdüngung H (hier: etwa 5 m jenseits der Scheitellinie der Bodenkrümmung hangaufwärts mit mehr als 15% Unterversorgung). Ferner ist erkennbar, dass im Falle der Fahrt parallel zur Scheitellinie der Bodenkrümmung je nach dem, auf welcher Seite des Zweischeibenstreuers sich die Bodenkrümmung befindet, das Streubild der jeweils rechten bzw. linken Verteilerscheibe in einem sehr unterschiedlichen Maße gestört werden kann, und dies nur im Bereich derjenigen Fahrgassen, in deren Streubreite und insbesondere in deren Arbeitsbreite die Bodenkrümmung fällt, nämlich im vorliegenden Fall bei Durchfahrt der mittleren Fahrgasse in negativer y-Richtung gemäß Fig. 3A und 3B (der Bodenkrümmung zugewandte, linke Verteilerscheibe) sowie bei Durchfahrt der rechten Fahrgasse in positiver y-Richtung gemäß Fig. 3A und 3B (der Bodenkrümmung zugewandte, wiederum linke Verteilerscheibe).

Während, wie weiter oben im Einzelnen dargelegt, im Hinblick auf eine in konstruktiver Hinsicht möglichst einfache und kostengünstige Ausgestaltung des Zweischeibenstreuers eine gemeinsame Neigungsverstellung beider Verteilerscheiben von Vorteil sein kann, kann es sich zwecks einer sehr genauen Kompensation von Streufehlern im Falle der Fahrt vornehmlich parallel zur Scheitellinie von Bodenkrümmungen folglich auch insbesondere anbieten, dass den Verteilerscheiben jeweils eine um die parallel zur Fahrtrichtung angeordnete Schwenkachse wirksame, separate Neigungsverstelleinrichtung zugeordnet ist, um sie einzeln bzw. unabhängig voneinander um ihre parallel zur Fahrtrichtung angeordnete Schwenkachse neigen zu können bzw. um insbesondere nur eine der Verteilerscheiben in Neigung versetzen zu können, nämlich die der Bodenkrümmung zugewandte Verteilerscheibe. Im vorliegenden Fall geschieht dies beispielsweise gemäß einer Kompensationsfunktion zur separaten Steuerung bzw. Regelung des Neigungswinkels einer jeweiligen Verteilerscheibe des Zweischeibenstreuers um eine parallel zur Fahrtrichtung und parallel zur Scheitellinie der Bodenkrümmung (bei x = 0) angeordnete Schwenkachse ("Rollachse"), welche ähnlich der Kompensationsfunktion für beide Verteilerscheiben um die senkrecht zur Fahrtrichtung angeordnete Schwenkachse gemäß der Fig. 1G die Erkenntnis berücksichtigt, dass sich die jeweiligen Streufehler (rechte bzw. links) hauptsächlich einerseits aus der jeweiligen Bodenneigung, andererseits aus der Relativanordnung des Zweischeibenstreuers (bzw. eines aus Zugmaschine bzw. Traktor und Zweischeibenstreuers gebildeten Gespanns) in Bezug auf die Bodenneigung ergeben. Einer solchen Kompensationsfunktion kann die folgende Basisfunktion des Rollwinkels einer jeweiligen Verteilerscheibe in Abhängigkeit des lateralen Abstandes x des Zweischeibenstreuers zur Scheitellinie der Krümmung zugrunde gelegt werden:

$$\text{Rollwinkel } (x) = f\,[\text{Rollwinkel}_{\text{Streuer}} - \text{Rollwinkel}_{\text{Boden}}\,(x-\Delta)]$$

Der Abstand $\Delta$ von der Stelle x, an welcher sich der Zweischeibenstreuer gerade befindet bzw. unter welchem Abstand er sich von der Bodenkrümmung befindet, bezeichnet dabei hier einen Abstand seitlich des Zweischeibenstreuer innerhalb dessen Streubreite, insbesondere innerhalb dessen Arbeitsbreite.

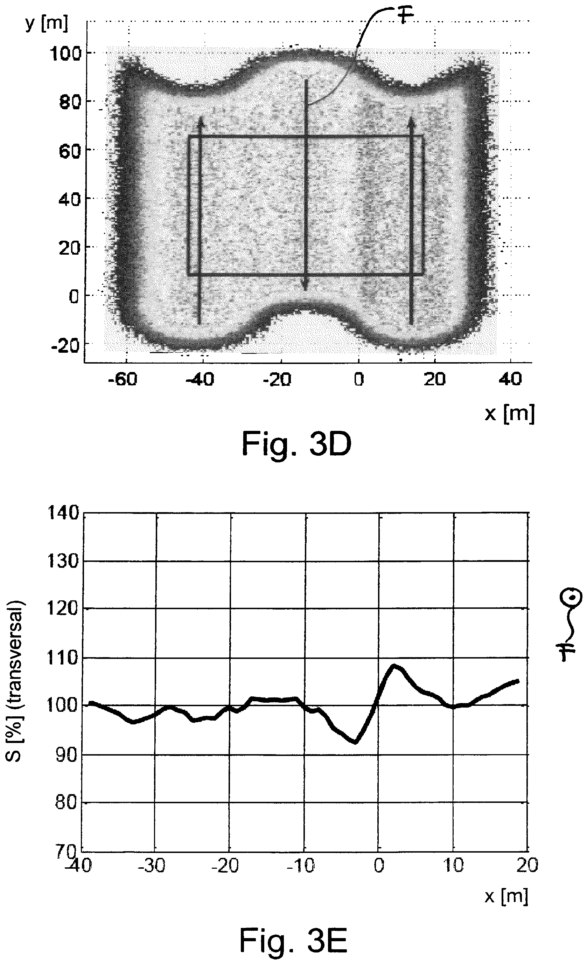

Während die Fig. 3D ein dem der Fig. 3B entsprechendes Schaubildes der dreidimensionalen Streugutverteilung mit Fahrtrichtung des Zweischeibenstreuers in y-Richtung parallel zu der Bodenkrümmung zeigt, aber nachdem die der Bodenkrümmung zugewandte - hier linke - Verteilerscheibe gemäß der obigen Kompensationsfunktion um einen Rollwinkel von 3° um die parallel zur Fahrtrichtung angeordnete Schwenkachse ("Rollachse") geneigt und die der Bodenkrümmung abgewandte - hier rechte - Verteilerscheibe nicht neigungsverstellt worden ist, zeigt die Fig. 3E ein der Fig. 3C entsprechendes Schaubild der Streugutverteilung auf dem Boden, aber gleichfalls nachdem die der Bodenkrümmung zugewandte - hier linke - Verteilerscheibe gemäß der obigen Kompensationsfunktion um einen Rollwinkel von 3° um die parallel zur Fahrtrichtung angeordnete Schwenkachse ("Rollachse") geneigt und die der Bodenkrümmung abgewandte - hier rechte - Verteilerscheibe nicht neigungsverstellt worden ist. Die zuvor gemäß dem Stand der Technik entstandenen Streufehler in Form von parallel zur Fahrtrichtung F nebeneinander angeordneten Bereichen einer Unterund einer Überdüngung (vgl. die Fig. 3B und 3C) sind infolge Neigung der der Bodenkrümmung zugewandten - hier linken - Verteilerscheibe um die Rollachse praktisch nicht mehr erkennbar, wobei sowohl im vormals unterdüngten Bereich als auch im vormals überdüngten Bereich jeweils eine Unter- bzw. Überversorgung von nur noch etwas mehr als etwa 5% herrscht, was weitgehend der Situation auf flachem, ebenen Gelände entspricht. Der guten Ordnung halber sei darauf hingewiesen, dass die Neigungsrichtung der der Bodenkrümmung zugewandten - hier linken - Verteilerscheibe um die parallel zur Fahrtrichtung F angeordnete Schwenkachse freilich in Richtung der Neigung des ihr zugewandten Hangs erfolgt, d.h. im vorliegenden Fall bei der Fahrt entlang der in Fig. 3A mittleren Fahrgasse (14 m links der Scheitellinie der Bodenkrümmung) bzw. bei der Fahrt entlang der in Fig. 3A rechten Fahrgasse (14,5 m rechts der Scheitellinie der Bodenkrümmung) wird die - jeweils in Fahrtrichtung F betrachtet - linke Verteilerscheibe an ihrem äußeren Umfangsende nach oben bzw. an ihrem inneren Umfangsende nach unten geneigt.

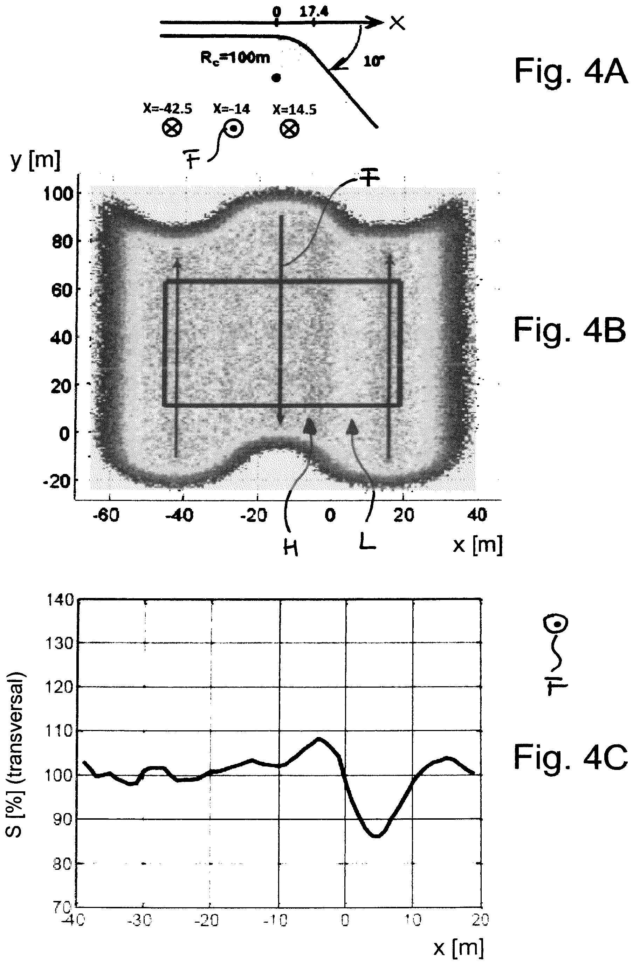

In der Fig. 4A ist eine Situation schematisch wiedergegeben, in welcher ein wiederum nicht zeichnerisch wiedergegebener Zweischeibenstreuer an einer - hier konvexen - Bodenkrümmung mit einer parallel zur Fahrtrichtung angeordneten Scheitellinie (bei x = 0) sowohl in positiver y-Richtung als auch in negativer y-Richtung in Parallelhangfahrt entlang fährt, wie es dem üblichen Anschlussfahren entlang parallel auf dem zu bestreuenden Feld angelegter Fahrgassen entspricht. Im vorliegenden Fall erstreckt sich die Bodenkrümmung beispielsweise wiederum zwischen der Horizontalen und einem unter einem Winkel von etwa 10° nach unten geneigten Hang, wobei der Krümmungsradius der Bodenkrümmung - insoweit entsprechend der Fig. 3A - etwa 100 m beträgt und sich die Krümmung folglich über einen x-Achsenabschnitt von 17,4 m erstreckt. Die in der Fig. 4A mittlere Fahrgasse verläuft beispielsweise unter einem Abstand von 14 m links, d.h. in negativer x-Richtung, von der Scheitellinie der Krümmung bei x = 0. Die benachbarten Fahrgassen sind wiederum unter einem der Arbeitsbreite entsprechenden Abstand von hier beispielsweise 28,5 m angeordnet; die Fahrtrichtung ist wiederum mit dem Bezugszeichen F gekennzeichnet.

In der Fig. 4B ist das Schaubild der dreidimensionalen Streugutverteilung auf dem Boden gezeigt, wie sie sich gemäß dem Stand der Technik, d.h. mit einem üblichen Zweischeibenstreuer ohne Neigungsverstelleinrichtung seiner Verteilerscheiben, einstellt, wenn der Zweischeibenstreuer alternierende Anschlussfahrten entsprechend der Situationen gemäß Fig. 4A durchführt (also jeweils entlang einer Fahrgasse parallel zur Scheitellinie der konkaven Bodenkrümmung, aber unter verschiedenen Lateralabständen zu derselben). Man erkennt, dass sich - senkrecht zur Fahrtrichtung F betrachtet - bei der Fahrt parallel zur Scheitellinie der Bodenkrümmung (in y-Richtung) im hangoberen bzw. ebenen Bereich links der konvexen Bodenkrümmung zunächst ein streifenförmiger Bereich der Überdüngung H und sodann im abfallenden, hangunteren Bereich ein hierzu parallel verlaufender, gleichfalls streifenförmiger Bereich der Unterdüngung L ergibt.

In der Fig. 4C ist ein Schaubild der Streugutverteilung S auf dem Boden (in [%] der Sollstreumenge) senkrecht zu den von dem Zweischeibenstreuer entsprechend Fig. 4A parallel zur Scheitellinie der Bodenkrümmung in y-Richtung durchfahrenen Fahrgassen gemäß dem Stand der Technik gezeigt, wobei in der Fig. 3C die Streugutverteilung über einen x-Achsenabschnitt beidseitig der in Fig. 4A mittleren, hier 14 m von der Scheitellinie (bei x = 0) der Bodenkrümmung beabstandeten Fahrgasse von jeweils etwas mehr als der Arbeitsbreite von hier 28,5 m dargestellt ist, wie sie in der Fig. 4B mit einem Rechteck umrandet ist. Man erkennt auch in der Fig. 4C einerseits den Bereich der Überdüngung H (hier: nahe der Scheitellinie der Bodenkrümmung mit einem Maximum an deren dem abfallenden Hang abgewandten Seite mit bis zu etwa 10% Überversorgung), andererseits den Bereich der Unterdüngung L (hier: etwa 5 m jenseits der Scheitellinie der Bodenkrümmung hangabwärts mit bis zu etwa 15% Unterversorgung) .

Die Kompensation dieser Streufehler geschieht beispielsweise wiederum in Analogie zu der oben unter Bezugnahme auf die Fig. 3 erläuterten Weise mittels einer entsprechenden Kompensationsfunktion, indem z.B. wiederum nur die der Bodenkrümmung zugewandte - hier linke - Verteilerscheibe gemäß der obigen Kompensationsfunktion um einen Rollwinkel von 3° um die parallel zur Fahrtrichtung angeordnete Schwenkachse ("Rollachse") geneigt und die der Bodenkrümmung abgewandte - hier rechte - Verteilerscheibe nicht neigungsverstellt wird. Die Neigungsrichtung der der konvexen Bodenkrümmung zugewandten - hier linken - Verteilerscheibe um die parallel zur Fahrtrichtung F angeordnete Schwenkachse erfolgt freilich gleichfalls in Richtung der Neigung des ihr zugewandten Hangs. Dies bedeutet bei der konvexen Bodenkrümmung der Fig. 4A bis 4C eine umgekehrte Neigungsrichtung wie im Falle der konkaven Bodenneigung der Fig. 3, d.h. im vorliegenden Fall bei der Fahrt entlang der in Fig. 4A mittleren Fahrgasse (14 m links der Scheitellinie der Bodenkrümmung) bzw. bei der Fahrt entlang der in Fig. 4A rechten Fahrgasse (14,5 m rechts der Scheitellinie der Bodenkrümmung) wird die - jeweils in Fahrtrichtung F betrachtet - linke Verteilerscheibe an ihrem äußeren Umfangsende nach unten bzw. an ihrem inneren Umfangsende nach oben geneigt.

**Patentansprüche**

1.    Verfahren zum gleichmäßigen Verteilen von Streugut an Lagen mit verschiedener Bodenneigung mittels eines Scheibenstreuers, welcher wenigstens eine Verteilerscheibe und wenigstens ein der Verteilerscheibe zugeordnetes Dosierorgan umfasst, wobei

- bei der Fahrt an oder nahe einer Krümmung des Bodens oder bei der Überfahrt einer Krümmung des Bodens, welche eine Scheitellinie mit einer senkrecht zur Fahrtrichtung (F) des Scheibenstreuers angeordneten Erstreckungsrichtungskomponente aufweist, die Verteilerscheibe um eine im Wesentlichen senkrecht zur Fahrtrichtung angeordnete Schwenkachse geneigt wird; und/oder

- bei der Fahrt an oder nahe einer Krümmung des Bodens oder bei der Überfahrt einer Krümmung des Bodens, welche eine Scheitellinie mit einer parallel zur Fahrtrichtung (F) des Scheibenstreuers angeordneten Erstreckungsrichtungskomponente aufweist, die Verteilerscheibe um eine im Wesentlichen parallel zur Fahrtrichtung angeordnete Schwenkachse geneigt wird, **dadurch gekennzeichnet, dass**

- bei der Fahrt an oder nahe einer Krümmung des Bodens oder bei der Überfahrt einer Krümmung des Bodens, welche eine vornehmlich senkrecht zur Fahrtrichtung (F) des Scheibenstreuers angeordnete Scheitellinie aufweist, die Verteilerscheibe um einen Winkel um die im Wesentlichen senkrecht zur Fahrtrichtung angeordnete Schwenkachse geneigt wird, welcher kleiner dem Krümmungswinkel der überfahrenen Krümmung des Bodens beträgt; und/oder

- bei der Fahrt an oder nahe einer Krümmung des Bodens oder bei der Überfahrt einer Krümmung des Bodens, welche eine vornehmlich parallel zur Fahrtrichtung (F) angeordnete Scheitellinie aufweist, die Verteilerscheibe um einen Winkel um die im Wesentlichen parallel zur Fahrtrichtung angeordnete Schwenkachse geneigt wird, welcher kleiner dem Krümmungswinkel der Krümmung des Bodens beträgt.

**2.** Verfahren nach Anspruch 1, **dadurch gekennzeichnet, dass**

- bei der Fahrt an oder nahe einer Krümmung des Bodens oder bei der Überfahrt einer Krümmung des Bodens, welche eine vornehmlich senkrecht zur Fahrtrichtung (F) des Scheibenstreuers angeordnete Scheitellinie aufweist, die Verteilerscheibe derart um die im Wesentlichen senkrecht zur Fahrtrichtung angeordnete Schwenkachse geneigt wird, dass sie im Wesentlichen parallel zur Neigung des Bodens an einer unter einem Abstand hinter dem Scheibenstreuer befindlichen Stelle angeordnet ist, wobei der Abstand größer als die minimale Wurfweite und kleiner als die maximale Wurfweite ist, wobei der Abstand insbesondere etwa der mittleren Wurfweite entspricht; und/oder

- bei der Fahrt an oder nahe einer Krümmung des Bodens oder bei der Überfahrt einer Krümmung des Bodens, welche eine vornehmlich parallel zur Fahrtrichtung (F) des Scheibenstreuers angeordnete Scheitellinie aufweist, die Verteilerscheibe um einen Winkel um die im Wesentlichen parallel zur Fahrtrichtung angeordnete Schwenkachse geneigt wird, welcher umso größer ist, je näher sich der Scheibenstreuer an der Scheitellinie der Krümmung befindet, und welcher umso kleiner ist, je weiter sich der Scheibenstreuer von der Scheitellinie der Krümmung entfernt befindet.

**3.** Verfahren nach einem Anspruch 1 oder 2, **dadurch gekennzeichnet, dass** bei der Fahrt an oder nahe einer Krümmung des Bodens oder bei der Überfahrt einer Krümmung des Bodens, welche eine sowohl senkrecht als auch parallel zur Fahrtrichtung angeordnete Erstreckungsrichtungskomponente aufweist, die Verteilerscheibe sowohl um die senkrecht zur Fahrtrichtung (F) angeordnete Schwenkachse als auch um die parallel zur Fahrtrichtung (F) angeordnete Schwenkachse geneigt wird.

**4.** Verfahren nach einem der Ansprüche 1 bis 3, **dadurch gekennzeichnet, dass**

- die Schaltpunkte, an welchen der Neigungswinkel der Verteilerscheibe um die senkrecht zur Fahrtrichtung (F) angeordnete Schwenkachse und/oder um die parallel zur Fahrtrichtung (F) angeordnete Schwenkachse verstellt wird, und/oder

- der Winkelbetrag, um welchen der Neigungswinkel der Verteilerscheibe um die senkrecht zur Fahrtrichtung (F) angeordnete Schwenkachse und/oder um die parallel zur Fahrtrichtung (F) angeordnete Schwenkachse verstellt wird, und/oder

- der Gradient der Veränderung des Neigungswinkels in Abhängigkeit wenigstens eines Parameters aus der Gruppe

- Neigungswinkeldifferenz der Krümmung des Bodens,

- Krümmungsradius der Krümmung des Bodens,

- Position der Scheitellinie der Krümmung des Bodens in Bezug auf den Scheibenstreuer,

- Fahrtrichtung in Bezug auf die Krümmung des Bodens,

- Drehzahl der Verteilerscheibe,

- Geometrie der Verteilerscheibe und/oder deren Wurfflügel,

- Neigung des Scheibenstreuers,

- physikalische Eigenschaften des Streugutes,

- Arbeitsbreite,
- Abmessungen des Scheibenstreuers und/oder einer Zugmaschine desselben,
- Neigungsgeschwindigkeit der Verteilerscheibe und
- Fahrgeschwindigkeit

ermittelt werden.

5. Verfahren nach einem der Ansprüche 1 bis 4, **dadurch gekennzeichnet, dass**

- die Schaltpunkte, an welchen der Neigungswinkel der Verteilerscheibe um die senkrecht zur Fahrtrichtung (F) angeordnete Schwenkachse und/oder um die parallel zur Fahrtrichtung (F) angeordnete Schwenkachse verstellt wird, und/oder
- der Winkelbetrag, um welchen der Neigungswinkel der Verteilerscheibe um die senkrecht zur Fahrtrichtung (F) angeordnete Schwenkachse und/oder um die parallel zur Fahrtrichtung (F) angeordnete Schwenkachse verstellt wird, und/oder
- der Gradient der Veränderung des Neigungswinkels in Abhängigkeit eines Kennwertes für die Flugeigenschaften des Streugutes, insbesondere in Abhängigkeit von dessen mittleren Wurfweite und/oder von der Arbeitsbreite, ermittelt werden.

6. Verfahren nach Anspruch 4 oder 5, **dadurch gekennzeichnet, dass**

- die ermittelten Schaltpunkte, an welchen der Neigungswinkel der Verteilerscheibe um die senkrecht zur Fahrtrichtung (F) angeordnete Schwenkachse und/oder um die parallel zur Fahrtrichtung (F) angeordnete Schwenkachse verstellt wird, und/oder
- der ermittelte Winkelbetrag, um welchen der Neigungswinkel der Verteilerscheibe um die senkrecht zur Fahrtrichtung (F) angeordnete Schwenkachse und/oder um die parallel zur Fahrtrichtung (F) angeordnete Schwenkachse verstellt wird, und/oder
- der Gradient der Veränderung des Neigungswinkels in einer einer Neigungsverstelleinrichtung der Verteilerscheibe zugeordneten Steuer- und/oder Regeleinrichtung hinterlegt werden.

7. Verfahren nach einem der Ansprüche 1 bis 6, **dadurch gekennzeichnet, dass**

- die Verteilerscheibe dadurch um die im Wesentlichen senkrecht zur Fahrtrichtung (F) angeordnete Schwenkachse geneigt wird, indem das gesamte Streuwerk oder der gesamte Scheibenstreuer, insbesondere mittels des Oberlenkers eines Dreipunkt-Krafthebers einer ihn tragenden Zugmaschine, oder nur die schwenkbar mit ihrem Antriebsstrang in Verbindung stehende Verteilerscheibe geneigt wird; und/oder
- die Verteilerscheibe dadurch um die im Wesentlichen parallel zur Fahrtrichtung (F) angeordnete Schwenkachse geneigt wird, indem das gesamte Streuwerk oder der gesamte Scheibenstreuer, insbesondere mittels der beiden Unterlenkerstreben eines Dreipunkt-Krafthebers einer ihn tragenden Zugmaschine, oder nur die schwenkbar mit ihrem Antriebsstrang in Verbindung stehende Verteilerscheibe geneigt wird.

8. Verfahren nach einem der Ansprüche 1 bis 7, **dadurch gekennzeichnet, dass** die aktuelle Position des Scheibenstreuers in Bezug auf Krümmungen des Bodens ermittelt wird.

9. Verfahren nach Anspruch 8, **dadurch gekennzeichnet, dass**

- eine elektronische Feldkarte, welche zumindest die Topologie des Bodens umfasst, bereitgestellt, die Position des Scheibenstreuers mittels eines Positionserfassungssystems bestimmt und mit der Feldkarte abgeglichen wird; oder
- die Topologie des Bodens mittels wenigstens eines dem Scheibenstreuer zugeordneten Sensors ermittelt wird.

10. Verfahren nach einem der Ansprüche 1 bis 9, **dadurch gekennzeichnet, dass** ein Scheibenstreuer eingesetzt wird, welcher wenigstens zwei mit seitlichem Abstand voneinander angeordnete Verteilerscheiben und

- je eine, einer jeweiligen Verteilerscheibe zugeordnete Neigungsverstelleinrichtung oder
- eine den Verteilerscheiben gemeinsame Neigungsverstelleinrichtung

umfasst, wobei die Neigungsverstelleinrichtung(en) mittels einer Steuer- und/oder Regeleinrichtung betätigbar ist bzw. sind.

**11.** Verfahren nach Anspruch 10, **dadurch gekennzeichnet, dass** bei der Fahrt an oder nahe einer Krümmung des Bodens oder bei der Überfahrt einer Krümmung des Bodens, welche eine Scheitellinie mit einer parallel zur Fahrtrichtung (F) des Scheibenstreuers angeordneten Erstreckungsrichtungskomponente aufweist, nur die der Krümmung des Bodens zugewandte Verteilerscheibe um die im Wesentlichen parallel zur Fahrtrichtung angeordnete Schwenkachse geneigt wird.

**12.** Verfahren nach Anspruch 10, **dadurch gekennzeichnet, dass** die Verteilerscheiben nur bei der Fahrt an oder nahe einer Krümmung des Bodens oder bei der Überfahrt einer Krümmung des Bodens, welche eine Scheitellinie mit einer senkrecht zur Fahrtrichtung (F) des Scheibenstreuers angeordneten Erstreckungsrichtungskomponente aufweist, um eine im Wesentlichen senkrecht zur Fahrtrichtung angeordnete Schwenkachse geneigt werden, während bei der Fahrt an oder nahe einer Krümmung des Bodens oder bei der Überfahrt einer Krümmung des Bodens, welche eine Scheitellinie mit einer parallel zur Fahrtrichtung (F) des Scheibenstreuers angeordneten Erstreckungsrichtungskomponente aufweist, ferner das Streubild in Richtung des ansteigenden Hangs und/oder entgegen der Richtung des abfallenden Hangs verlagert wird.

**13.** Verfahren nach Anspruch 12, **dadurch gekennzeichnet, dass**

(a) die Drehzahl der hangoberen Verteilerscheibe gegenüber der Normdrehzahl erhöht und/oder die Drehzahl der hangunteren Verteilerscheibe gegenüber der Normdrehzahl vermindert wird; und/oder

(b) der Aufgabepunkt des Streugutes auf die hangobere Verteilerscheibe nach innen und/oder der Aufgabepunkt auf die hanguntere Verteilerscheibe nach außen verlagert wird; und/oder

(c)

- der Aufgabepunkt des Streugutes auf die hangobere Verteilerscheibe in Drehrichtung dieser Verteilerscheibe und/oder der Aufgabepunkt des Streugutes auf die hanguntere Verteilerscheibe entgegen der Drehrichtung dieser Verteilerscheibe verlagert wird, sofern es sich um einen Zweischeibenstreuer handelt, bei welchem die beiden Verteilerscheiben in einer Drehrichtung in ihrer Mitte zwischen den beiden Verteilerscheiben entgegen der Fahrtrichtung drehangetrieben sind; oder
- der Aufgabepunkt des Streugutes auf die hangobere Verteilerscheibe entgegen der Drehrichtung dieser Verteilerscheibe und/oder der Aufgabepunkt des Streugutes auf die hanguntere Verteilerscheibe in Drehrichtung dieser Verteilerscheibe verlagert wird, sofern es sich um einen Zweischeibenstreuer handelt, bei welchem die beiden Verteilerscheiben in einer Drehrichtung in ihrer Mitte zwischen den beiden Verteilerscheiben in Fahrtrichtung drehangetrieben sind.

**14.** Scheibenstreuer mit wenigstens einer Verteilerscheibe, wenigstens einem der Verteilerscheibe zugeordneten Dosierorgan sowie wenigstens einer, der Verteilerscheibe zugeordneten Neigungsverstelleinrichtung, **dadurch gekennzeichnet, dass** die Neigungsverstelleinrichtung mittels einer Steuer- und/oder Regeleinrichtung betätigbar ist, welche zur Durchführung eines Verfahrens nach einem der vorangehenden Ansprüche ausgebildet ist.

## Claims

**1.** Method for the uniform distribution of spreading material on areas with different ground inclination by means of a disc spreader which comprises at least one spreader disc and at least one metering element assigned to the spreader disc, wherein

- during travel on or close to a curvature of the ground or during travel over a curvature of the ground which has an apex line with an extent direction component arranged perpendicular to the direction of travel (F) of the disc spreader, the spreader disc is inclined about a pivot axis arranged substantially perpendicular to the direction of travel; and/or
- during travel on or close to a curvature of the ground or during travel over a curvature of the ground which has an apex line with an extent direction component arranged parallel to the direction of travel (F) of the disc spreader, the spreader disc is inclined about a pivot axis arranged substantially parallel to the direction of travel, **characterized in that**
- during travel over a curvature of the ground or during travel over a curvature of the ground which has an apex line arranged predominantly perpendicular to the direction of travel (F) of the disc spreader, the spreader disc is inclined about the pivot axis arranged substantially perpendicular to the direction of travel, by an angle which is less than the curvature angle of the curvature of the ground being travelled over; and/or

- during travel on or close to a curvature of the ground or during travel over a curvature of the ground which has an apex line arranged predominantly parallel to the direction of travel (F), the spreader disc is inclined about the pivot axis arranged substantially parallel to the direction of travel, by an angle which is less than the curvature angle of the curvature of the ground.

2. Method according to Claim 1, **characterized in that**

- during travel on or close to a curvature of the ground or during travel over a curvature of the ground which has an apex line arranged predominantly perpendicular to the direction of travel (F) of the disc spreader, the spreader disc is inclined about the pivot axis arranged substantially perpendicular to the direction of travel, such that said spreader disc is arranged substantially parallel to the inclination of the ground at a position situated at a distance behind the disc spreader, wherein the distance is greater than the minimum throw range and smaller than the maximum throw range, wherein the distance corresponds in particular approximately to the average throw range, and/or
- during travel on or close to a curvature of the ground or during travel over a curvature of the ground which has an apex line arranged predominantly parallel to the direction of travel (F) of the disc spreader, the spreader disc is inclined about the pivot axis arranged substantially parallel to the direction of travel, by an angle which is greater the closer the disc spreader is situated to the apex line of the curvature, and which is smaller the further the disc spreader is situated from the apex line of the curvature.

3. Method according to Claim 1 or 2, **characterized in that**, during travel on or close to a curvature of the ground or during travel over a curvature of the ground which has an extent direction component arranged both perpendicular and parallel to the direction of travel, the spreader disc is inclined both about the pivot axis arranged perpendicular to the direction of travel (F) and about the pivot axis arranged parallel to the direction of travel (F).

4. Method according to one of Claims 1 to 3, **characterized in that**

- the switching points at which the inclination angle of the spreader disc is adjusted about the pivot axis arranged perpendicular to the direction of travel (F) and/or about the pivot axis arranged parallel to the direction of travel (F), and/or
- the magnitude of the angle by which the inclination angle of the spreader disc is adjusted about the pivot axis arranged perpendicular to the direction of travel (F) and/or about the pivot axis arranged parallel to the direction of travel (F), and/or
- the gradient of the change of the inclination angle

are determined as a function of at least one parameter from the following group:
- inclination angle difference of the curvature of the ground,
- curvature radius of the curvature of the ground,
- position of the apex line of the curvature of the ground in relation to the disc spreader,
- direction of travel in relation to the curvature of the ground,
- rotational speed of the spreader disc,
- geometry of the spreader disc and/or of the spreading wings thereof,
- inclination of the disc spreader,
- physical characteristics of the spreading material,
- working width,
- dimensions of the disc spreader and/or of a tractor machine thereof,
- inclination speed of the spreader disc, and
- travelling speed.

5. Method according to one of Claims 1 to 4, **characterized in that**

- the switching points at which the inclination angle of the spreader disc is adjusted about the pivot axis arranged perpendicular to the direction of travel (F) and/or about the pivot axis arranged parallel to the direction of travel (F), and/or
- the magnitude of the angle by which the inclination angle of the spreader disc is adjusted about the pivot axis arranged perpendicular to the direction of travel (F) and/or about the pivot axis arranged parallel to the direction of travel (F), and/or
- the gradient of the change of the inclination angle

are determined as a function of a characteristic value for the flight characteristics of the spreading material, preferably as a function of the mean throw range thereof and/or as a function of the working width.

6. Method according to Claim 4 or 5, **characterized in that**

- the determined switching points at which the inclination angle of the spreader disc is adjusted about the pivot axis arranged perpendicular to the direction of travel (F) and/or about the pivot axis arranged parallel to the direction of travel (F), and/or
- the determined magnitude of the angle by which the inclination angle of the spreader disc is adjusted about the pivot axis arranged perpendicular to the direction of travel (F) and/or about the pivot axis arranged parallel to the direction of travel (F), and/or
- the gradient of the change of the inclination angle

are stored in a control and/or regulation device assigned to an inclination adjustment device of the spreader disc.

7. Method according to one of Claims 1 to 6, **characterized in that**

- the spreader disc is inclined about the pivot axis arranged substantially perpendicular to the direction of travel (F) by virtue of the entire spreading mechanism or the entire disc spreader being inclined, in particular by means of the upper link of a three-point linkage of a tractor machine which supports it, or only the spreader disc which is connected pivotably to the drivetrain thereof being inclined; and/or
- the spreader disc is inclined about the pivot axis arranged substantially parallel to the direction of travel (F) by virtue of the entire spreading mechanism or the entire disc spreader being inclined, in particular by means of the two lower link struts of a three-point linkage of a tractor machine which supports it, or only the spreader disc which is connected pivotably to the drivetrain thereof being inclined.

8. Method according to one of Claims 1 to 7, **characterized in that** the present position of the disc spreader in relation to curvatures of the ground is determined.

9. Method according to Claim 8, **characterized in that**

- an electronic field map which comprises at least the topology of the ground is provided, and the position of the disc spreader is determined by means of a position detection system and compared with the field map; or
- the topology of the ground is determined by means of at least one sensor assigned to the disc spreader.

10. Method according to one of Claims 1 to 9, **characterized in that** a disc spreader is used which comprises at least two spreader discs arranged with a lateral spacing to one another and

- in each case one inclination adjustment device assigned to a respective spreader disc or
- an inclination adjustment device common to the spreader discs,
wherein the inclination adjustment device(s) is or are actuatable by means of a control and/or regulation device.

11. Method according to Claim 10, **characterized in that**, during travel on or close to a curvature of the ground or during travel over a curvature of the ground which has an apex line with an extent direction component arranged parallel to the direction of travel (F) of the disc spreader, only that spreader disc which faces toward the curvature of the ground is inclined about the pivot axis arranged substantially parallel to the direction of travel.

12. Method according to Claim 10, **characterized in that** the spreader discs are inclined about a pivot axis arranged substantially perpendicular to the direction of travel only during travel on or close to a curvature of the ground or during travel over a curvature of the ground which has an apex line with an extent direction component arranged perpendicular to the direction of travel (F) of the disc spreader, whereas, during travel on or close to a curvature of the ground or during travel over a curvature of the ground which has an apex line with an extent direction component arranged parallel to the direction of travel (F) of the disc spreader, it is furthermore provided that the spreading pattern is shifted in the direction of the upward slope and/or counter to the direction of the downward slope.

13. Method according to Claim 12, **characterized in that**

(a) the rotational speed of the spreader disc further up the slope is increased in relation to the normal rotational speed and/or the rotational speed of the spreader disc arranged further down the slope is reduced in relation to the normal rotational speed; and/or

(b) the feed-in point of the spreading material onto the spreader disc further up the slope is shifted inwards and/or the feed-in point onto the spreader disc further down the slope is shifted outwards; and/or

(c)

    - the feed-in point of the spreading material onto the spreader disc further up the slope is shifted in the direction of rotation of said spreader disc and/or the feed-in point of the spreading material onto the spreader disc further down the slope is shifted counter to the direction of rotation of said spreader disc, if a two-disc spreader is involved in the case of which the two spreader discs are driven in rotation in a direction of rotation counter to the direction of travel in their centre between the two spreader discs; or

    - the feed-in point of the spreading material onto the spreader disc further up the slope is shifted counter to the direction of rotation of said spreader disc and/or the feed-in point of the spreading material onto the spreader disc further down the slope is shifted in the direction of rotation of said spreader disc, if a two-disc spreader is involved in which the two spreader discs are driven in rotation in a direction of rotation in the direction of travel in their centre between the two spreader discs.

14. Disc spreader having at least one spreader disc, at least one metering element assigned to the spreader disc and at least one inclination adjustment device which is assigned to the spreader disc, **characterized in that** the inclination adjustment device is actuatable by means of a control and/or regulation device being designed for carrying out a method according to one of the preceding claims.

**Revendications**

1. Procédé de distribution uniforme de produit dispersible sur des zones en pente au moyen d'un disperseur à disque comprenant au moins un disque de distribution et au moins un organe de dosage associé au disque de distribution ;

    - en cas de conduite au niveau d'une courbure du sol ou à proximité de celle-ci ou en cas de passage par une courbure du sol présentant une ligne de sommet avec une composante de direction d'extension disposée perpendiculairement à la direction d'avancée (F) du disperseur à disque, le disque de distribution est incliné selon un axe de pivotement disposé pour l'essentiel perpendiculairement à la direction d'avancée ; et/ou

    - en cas de conduite au niveau d'une courbure du sol ou à proximité de celle-ci ou en cas de passage par une courbure du sol présentant une ligne de sommet avec une composante de direction d'extension disposée parallèlement à la direction d'avancée (F) du disperseur à disque, le disque de distribution est incliné selon un axe de pivotement disposé pour l'essentiel parallèlement à la direction d'avancée ;

    **caractérisé en ce que** :

    - en cas de conduite au niveau d'une courbure du sol ou à proximité de celle-ci ou en cas de passage par une courbure du sol présentant une ligne de sommet disposée essentiellement perpendiculairement à la direction d'avancée (F) du disperseur à disque, le disque de distribution est incliné selon un angle correspondant à l'axe de pivotement disposé pour l'essentiel perpendiculairement à la direction d'avancée et inférieur à l'angle de courbure de la courbure parcourue du sol ; et/ou

    - en cas de conduite au niveau d'une courbure du sol ou à proximité de celle-ci ou en cas de passage par une courbure du sol présentant une ligne de sommet disposée essentiellement parallèlement à la direction d'avancée (F), le disque de distribution est incliné selon un angle correspondant à l'axe de pivotement disposé pour l'essentiel parallèlement à la direction d'avancée, ledit angle étant inférieur à l'angle de courbure de la courbure du sol.

2. Procédé selon la revendication 1, **caractérisé en ce que** :

    - en cas de conduite au niveau d'une courbure du sol ou à proximité de celle-ci ou en cas de passage par une courbure du sol présentant une ligne de sommet disposée essentiellement perpendiculairement à la direction d'avancée (F) du disperseur à disque, le disque de distribution est incliné de telle sorte selon l'axe de pivotement disposé pour l'essentiel perpendiculairement à la direction d'avancée qu'il est disposé pour l'essentiel parallèlement à la pente du sol en un point se trouvant derrière le disperseur à disque, à une certaine distance, la distance étant supérieure à la largeur de projection minimale et inférieure à la largeur de projection maximale, la distance correspondant notamment approximativement à la largeur de projection moyenne ; et/ou

- en cas de conduite au niveau d'une courbure du sol ou à proximité de celle-ci ou en cas de passage par une courbure du sol présentant une ligne de sommet disposée essentiellement parallèlement à la direction d'avancée (F) du disperseur à disque, le disque de distribution est incliné selon un angle correspondant à l'axe de pivotement disposé pour l'essentiel parallèlement à la direction d'avancée, ledit angle étant d'autant plus grand à mesure que le disperseur à disque se trouve plus près de la ligne de sommet de la courbure et d'autant plus petit à mesure respectivement que le disperseur à disque s'écarte de la ligne de sommet de la courbure.

3. Procédé selon la revendication 1 ou 2, **caractérisé en ce qu'**en cas de conduite au niveau d'une courbure du sol ou à proximité de celle-ci ou en cas de passage par une courbure du sol présentant une composante de direction d'extension disposée tant perpendiculairement que parallèlement à la direction d'avancée, le disque de distribution est incliné tant selon l'axe de pivotement disposé perpendiculairement à la direction d'avancée (F) que selon l'axe de pivotement disposé parallèlement à la direction d'avancée (F).

4. Procédé selon l'une quelconque des revendications 1 à 3, **caractérisé en ce que** :

- les points de bascule au niveau desquels l'angle d'inclinaison du disque de distribution peut être déplacé par rapport à l'axe de pivotement disposé perpendiculairement à la direction d'avancée (F) et/ou par rapport à l'axe de pivotement disposé parallèlement à la direction d'avancée (F) ; et/ou
- la valeur angulaire dont l'angle d'inclinaison du disque de distribution peut être déplacé par rapport à l'axe de pivotement disposé perpendiculairement à la direction d'avancée (F) et/ou par rapport à l'axe de pivotement disposé parallèlement à la direction d'avancée (F) ; et/ou
- le gradient de variation de l'angle d'inclinaison ;

sont déterminés en fonction d'au moins un paramètre parmi le groupe suivant :

- différence d'angle d'inclinaison de la courbure du sol ;
- rayon de courbure de la courbure du sol ;
- position de la ligne de sommet de la courbure du sol par rapport au disperseur à disque ;
- direction d'avancée par rapport à la courbure du sol ;
- vitesse de rotation du disque de distribution ;
- forme géométrique du disque de distribution et/ou de ses pales d'éjection ;
- inclinaison du disperseur à disque ;
- propriétés physiques du produit dispersible ;
- largeur de travail ;
- dimensions du disperseur à disque et/ou d'un tracteur associé ;
- vitesse d'inclinaison du disque de distribution ; et
- vitesse d'avancée.

5. Procédé selon l'une quelconque des revendications 1 à 4, **caractérisé en ce que** :

- les points de bascule au niveau desquels l'angle d'inclinaison du disque de distribution peut être déplacé par rapport à l'axe de pivotement disposé perpendiculairement à la direction d'avancée (F) et/ou par rapport à l'axe de pivotement disposé parallèlement à la direction d'avancée (F) ; et/ou
- la valeur angulaire dont l'angle d'inclinaison du disque de distribution peut être déplacé par rapport à l'axe de pivotement disposé perpendiculairement à la direction d'avancée (F) et/ou par rapport à l'axe de pivotement disposé parallèlement à la direction d'avancée (F) ; et/ou
- le gradient de variation de l'angle d'inclinaison ;
sont déterminés en fonction d'une valeur caractéristique des propriétés de vol du produit dispersible, notamment en fonction de sa largeur de projection moyenne et/ou de sa largeur de travail.

6. Procédé selon la revendication 4 ou 5, **caractérisé en ce que** :

- les points de bascule déterminés au niveau desquels l'angle d'inclinaison du disque de distribution peut être déplacé par rapport à l'axe de pivotement disposé perpendiculairement à la direction d'avancée (F) et/ou par rapport à l'axe de pivotement disposé parallèlement à la direction d'avancée (F) ; et/ou
- la valeur angulaire déterminée dont l'angle d'inclinaison du disque de distribution peut être déplacé par rapport à l'axe de pivotement disposé perpendiculairement à la direction d'avancée (F) et/ou par rapport à l'axe de pivotement disposé parallèlement à la direction d'avancée (F) ; et/ou
- le gradient de la variation de l'angle d'inclinaison ;
sont mémorisés dans un dispositif de commande et/ou de réglage associé à un dispositif de réglage d'inclinaison du disque de distribution.

**7.** Procédé selon l'une quelconque des revendications 1 à 6, **caractérisé en ce que** :

- le disque de distribution est incliné de telle sorte par rapport à l'axe de pivotement disposé pour l'essentiel perpendiculairement à la direction d'avancée (F) que la totalité du mécanisme d'épandage ou la totalité du disperseur à disque soit inclinée, notamment au moyen de la bielle supérieure d'un relevage à trois points d'un tracteur le supportant, ou que seul le disque de distribution relié de façon pivotante à sa chaîne cinématique soit incliné ; et/ou
- le disque de distribution est incliné de telle sorte par rapport à l'axe de pivotement disposé pour l'essentiel parallèlement à la direction d'avancée (F) que la totalité du mécanisme d'épandage ou la totalité du disperseur à disque soit inclinée, notamment au moyen des deux étais de bielle inférieure d'un relevage à trois points d'un tracteur le supportant, ou que seul le disque de distribution relié de façon pivotante à sa chaîne cinématique soit incliné.

**8.** Procédé selon l'une quelconque des revendications 1 à 7, **caractérisé en ce que** la position actuelle du disperseur à disque est déterminée par rapport aux courbures du sol.

**9.** Procédé selon la revendication 8, **caractérisé en ce que** :

- une carte du terrain électronique comprenant au moins la topologie du sol est mise à disposition, la position du disperseur à disque étant déterminée à l'aide d'un système de détection de position et étant comparée à la carte du terrain ; ou
- la topologie du sol est déterminée à l'aide d'au moins un capteur associé au disperseur à disque.

**10.** Procédé selon l'une quelconque des revendications 1 à 9, **caractérisé en ce qu'**un disperseur à disque est utilisé, ce disperseur comprenant au moins deux disques de distribution disposés à une certaine distance latérale l'un de l'autre ; et

- respectivement un dispositif de réglage d'inclinaison associé à un disque de distribution respectif ; ou
- un dispositif de réglage d'inclinaison commun aux disques de distribution ;
le ou les dispositifs de réglage d'inclinaison pouvant être actionnés au moyen d'un dispositif de commande et/ou de réglage.

**11.** Procédé selon la revendication 10, **caractérisé en ce qu'**en cas de conduite au niveau d'une courbure du sol ou à proximité de celle-ci ou en cas de passage par une courbure du sol présentant une ligne de sommet avec une composante de direction d'extension disposée parallèlement à la direction d'avancée (F) du disperseur à disque, seul le disque de distribution orienté vers la courbure du sol est incliné par rapport à l'axe de pivotement disposé pour l'essentiel parallèlement à la direction d'avancée.

**12.** Procédé selon la revendication 10, **caractérisé en ce que** ce n'est qu'en cas de conduite au niveau d'une courbure du sol ou à proximité de celle-ci ou en cas de passage par une courbure du sol présentant une ligne de sommet avec une composante de direction d'extension disposée perpendiculairement à la direction d'avancée (F) du disperseur à disque que les disques de distribution sont inclinés par rapport à un axe de pivotement disposé pour l'essentiel perpendiculairement à la direction d'avancée tandis qu'en cas de conduite au niveau d'une courbure du sol ou à proximité de celle-ci ou en cas de passage par une courbure du sol présentant une ligne de sommet avec une composante de direction d'extension disposée parallèlement à la direction d'avancée (F) du disperseur à disque, le schéma d'épandage est en outre décalé en direction de la pente montante et/ou à l'encontre de la direction de la pente descendante.

**13.** Procédé selon la revendication 12, **caractérisé en ce que** :

(a) la vitesse de rotation du disque de distribution supérieur par rapport à la pente est augmentée par rapport à la vitesse de rotation normale et/ou la vitesse de rotation du disque de distribution inférieur par rapport à la pente est réduite par rapport à la vitesse de rotation normale ; et/ou

(b) le point cible du produit dispersible est décalé vers l'intérieur sur le disque de distribution supérieur par rapport à la pente et/ou le point cible est décalé vers l'extérieur sur le disque de distribution inférieur par rapport à la pente ; et/ou

(c)

- sur le disque de distribution supérieur par rapport à la pente, le point cible du produit dispersible est décalé dans la direction de rotation de ce disque de distribution et/ou sur le disque de distribution inférieur par rapport à la pente, le point cible du produit dispersible est décalé à l'encontre de la direction de rotation de ce disque de distribution, dès lors qu'il s'agit d'un épandeur à deux disques dans lequel les deux disques de distribution sont entraînés en rotation de façon centrale entre les deux disques de distribution, dans une direction de rotation, à l'encontre de la direction d'avancée ; ou

- sur le disque de distribution supérieur par rapport à la pente, le point cible du produit dispersible est décalé à l'encontre de la direction de rotation de ce disque de distribution et/ou sur le disque de distribution inférieur par rapport à la pente, le point cible du produit dispersible est décalé dans la direction de rotation de ce disque de distribution dès lors qu'il s'agit d'un épandeur à deux disques dans lequel les deux disques de distribution sont entraînés en rotation de façon centrale entre les deux disques de distribution, dans une direction de rotation, dans la direction d'avancée.

14. Disperseur à disque équipé d'au moins un disque de distribution, d'au moins un organe de dosage associé au disque de distribution ainsi que d'au moins un dispositif de réglage d'inclinaison associé au disque de distribution, **caractérisé en ce que** le dispositif de réglage d'inclinaison peut être actionné au moyen d'un dispositif de commande et/ou de réglage réalisé pour la mise en oeuvre d'un procédé selon l'une quelconque des revendications précédentes.

Fig. 1A

Fig. 1B

Fig. 1C

Fig. 1D

Fig. 1E

Fig. 1F

Fig. 1G

Fig. 1H

Fig. 1I

Fig. 2A

Fig. 2B

Fig. 2C

Fig. 3A

Fig. 3B

Fig. 3C

Fig. 3D

Fig. 3E

Fig. 4A

Fig. 4B

Fig. 4C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2415338 B1
- EP 1068784 A1
- EP 2057876 A1
- EP 2742790 B1